Europäisches Patentamt

European Patent Office

Office européen des brevets

(11) Veröffentlichungsnummer: **0 629 851 A2**

# (12) EUROPÄISCHE PATENTANMELDUNG

(21) Anmeldenummer: **94109051.6**

(22) Anmeldetag: **13.06.94**

(51) Int. Cl.5: **G01N 21/39**, H01S 3/103

(30) Priorität: 17.06.93 DE 4320036
17.06.93 DE 4320037
17.06.93 DE 4320038
30.09.93 DE 4333422
09.11.93 DE 4338233

(43) Veröffentlichungstag der Anmeldung:
**21.12.94 Patentblatt 94/51**

(84) Benannte Vertragsstaaten:
**DE FR GB IT**

�[71] Anmelder: **FRAUNHOFER-GESELLSCHAFT ZUR FÖRDERUNG DER ANGEWANDTEN FORSCHUNG E.V.**
**Leonrodstrasse 54**
**D-80636 München (DE)**

(72) Erfinder: **Werle, Peter, Dr.**
**Zugspitzstrasse 7**
**D-82490 Farchant (DE)**

(74) Vertreter: **Kruspig, Volkmar, Dipl.-Ing.**
**Patentanwälte**
**Meissner, Bolte & Partner**
**Postfach 86 06 24**
**D-81633 München (DE)**

(54) **Vorrichtung zur absorptionsspektroskopischen Spurengasanalytik.**

㊼ Die Erfindung betrifft eine komplexe Vorrichtung zur absorptionsspektroskopischen Spurengasanalytik, mit deren Hilfe zum einen in effektiver Weise eine Laserstromversorgung möglich ist und wobei nach Durchlauf der Laserstrahlung durch eine Meß- und Referenzzelle erhaltene Signale unter Anwendung verschiedenster Modulationstechniken bewertet werden können. Des weiteren ermöglicht die Erfindung eine On-Line Driftkorrektur, ohne daß ein Abspeichern und nachträgliches Bearbeiten einer Vielzahl von Rohspektren notwendig ist. Zusätzlich ist eine dynamische Intensitätsnormierung möglich und es kann auf nicht mechanischem Wege abwechselnd eine Proben- und Untergrundmessung mit einer hohen zeitlichen Auflösung realisiert werden.

EP 0 629 851 A2

Die Erfindung betrifft eine Vorrichtung zur absorptionsspektroskopischen Spurengasanalytik.

Insbesondere betrifft die Erfindung eine Anordnung und ein Verfahren zur Stromversorgung eines Meßlasers, nämlich eines Diodenlasers für die Verwendung in der absorptionsspektroskopischen Spurengasanalytik, eine Einrichtung zur Modulation und Demodulation mit einer Anordnung und einem Verfahren zum Bewerten eines Meßsignals nach Betrag und Phase in Bezug auf ein Referenzsignal, eine Anordnung und ein Verfahren zur Driftkorrektur zeitdiskreter Meßsignale bezogen auf ein Referenzsignal ebenfalls für die absorptionsspektroskopische Spurengasanalytik, eine Einrichtung zur Bestimmung und Normierung der Intensität eines Meßsignals mit einem zugehörigen Verfahren für den Einsatz bei der Modulations-Laser-Absorptionsspektroskopie sowie eine Anordnung und eines Verfahrens zur abwechselnden Proben- und Untergrundmessung.

In der spektroskopischen Spurengasanalytik werden vorwiegend Diodenlaser um nahen und mittleren Infrarot eingesetzt. Wesentlich für die Stabilität des Meßsystems sowie für dessen Empfindlichkeit ist die Stromversorgung der eingesetzten Diodenlaser. Um zum Beispiel Spurengase absorptionsspektroskopisch bestimmen zu können, wird einem Gleichstrom zur Versorgung des Lasers eine zusätzliche Stromrampe überlagert, die die Laseremission mit der Rampenfrequenz proportional zum Rampenhub im Frequenzbereich durchstimmt. Eine weitere Erhöhung der Empfindlichkeit kann zusätzlich durch eine Modulationstechnik, zum Beispiel eine Amplituden- oder Frequenzmodulation erreicht werden. Das Absorptionsmeßsignal wird durch die relative Position von Laser- und Absorptionslinie erzeugt. Da der Laser mit der Zeit eine Absorptionslinie überstreicht, erhält man einen zeitlichen Signalverlauf, der von der Form der Absorptionslinie und der jeweiligen Detektionstechnik abhängt.

In der US-PS 5 103 453 wird vorgeschlagen, den verwendeten Diodenlaser mit einem zweiten, sogenannten Heizlaser durchzustimmen. Es wird demgemäß ein Erhitzen des Diodenlasers auf optischem Wege vorgenommen. Durch eine entsprechende Steuereinheit wird der Heizlaser kontinuierlich durchgestimmt, so daß auch die Wellenlänge des Diodenlasers in gleichem Maße veränderbar ist. Es besteht jedoch der Nachteil darin, daß es zu einer Phasenverschiebung zwischen der Temperatur des Diodenlasers und der vom Heizlaser ausgesandten Wärmestrahlung bedingt durch die Kapazität und den thermischen Widerstand der Gesamtanordnung kommt. Ein weiterer Nachteil ist eine unerwünschte Amplitudenmodulation im Dioden-Laser Ausgangssignal. Um diese Probleme zu lösen wird gemäß der PS-US 5 103 453 vorgeschlagen, eine Leistungsregelung der Diodenlaser-Stromversorgung vorzunehmen, wobei die erste und zweite Harmonische eines Detektorsignals zur Leistungsregelung genutzt wird. Dies erfordert aber eine extrem aufwendige Stromversorgung mit einer Bandbreite von ca. 200 bis 700 Hz, wodurch die Vorteile, die mit dem optischen Erhitzen des Diodenlasers zur Modulation desselben teilweise wieder aufgehoben werden.

Aus Cooper, D.; Gallagher, T.F.: Double frequency and modulation spectroscopy; Applied Optics, Vol. 24, Nr. 9 vom 1.Mai 1985, Seite 1327 ff. ist ein Doppelfrequenzmodulationsverfahren zur Anwendung in der Spektroskopie bekannt. Mit Hilfe dieses Verfahrens sollen die Anforderungen an die Bandbreite der verwendeten Detektoren verringert werden, so daß kostengünstigere spektroskopische Vorrichtungen realisiert werden können.

Gemäß oben genannter Lösung wird vorgeschlagen, entweder zwei Frequenzmodulatoren oder eine Kombination des Frequenzmodulators mit einem Amplitudenmodulator vorzusehen. Bei der sogenannten Doppelfrequenz- oder Zwei-Ton-Modulation werden dann zwei unterschiedliche Frequenzen gemischt und als Modulationssignal bereitgestellt. Im Ergebnis des Mischens entsteht die Summe und die Differenz der Eingangsfrequenzen. Die geringere der beiden Eingangsfrequenzen wird über einen Koppler ausgekoppelt und über einen Frequenzverdoppler einem phasenempfindlichen Detektor zur Verfügung gestellt. Bei einem derartigen Verfahren entstehen durch die Frequenzmischung störende harmonische Komponenten im Modulationssignal, welche die Auswertung mittels des phasenempfindlichen Detektors beeinträchtigen können.

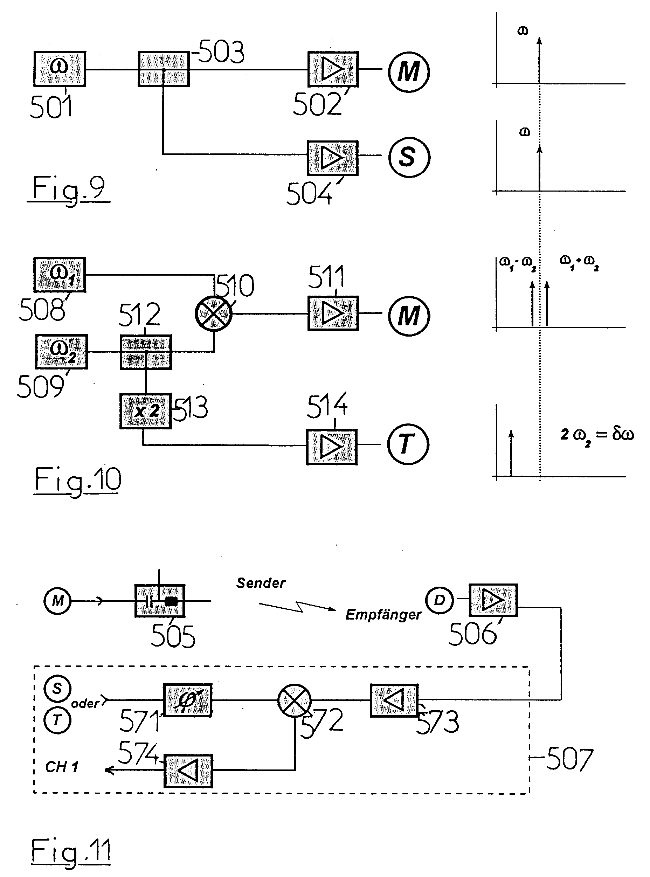

Der Stand der Technik zur Modulationsproblematik läßt sich unter Hinweis auf die Figuren 9 bis 11 wie folgt zusammenfassend charakterisieren.

Gemäß Fig. 9 ist eine Single-Tone- bzw. Ein-Ton-Modulationstechnik bekannt, bei der ein Oszillator 501 eine feste oder veränderliche, d. h. durchstimmbare Frequenz erzeugt, welche über einen Verstärker 502 als Modulationssignal M zur Verfügung steht. Über einen Koppler 503 wird ein Signalteil S ausgekoppelt, um über einen weiteren Verstärker 504 als Referenzsignal für eine phasenempfindliche Detektion bereitzustehen.

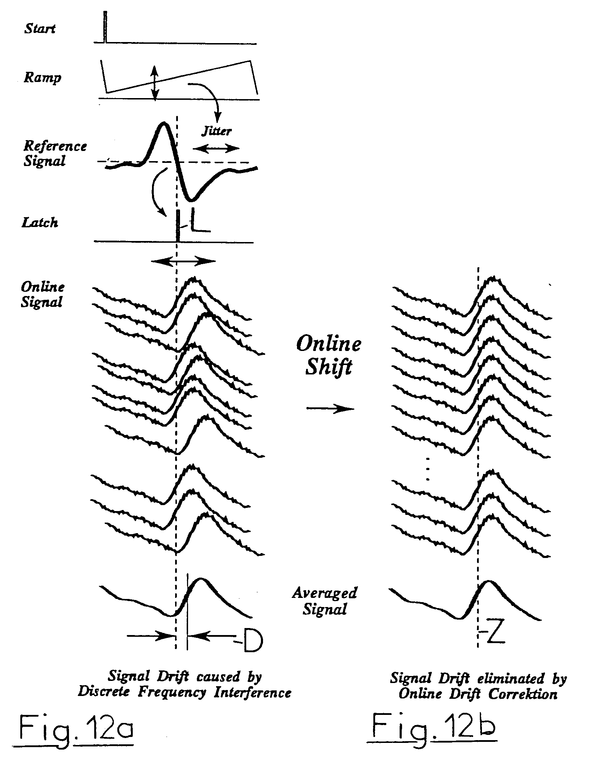

Gemäß Fig. 11 wird das Modulationssignal M über ein Einkoppelglied 505 einem Sender, z. B. einer Laserdiode zugeführt, welche ein moduliertes Signal aussendet, das auf eine Übertragungsstrecke gelangt und in Wechselwirkung mit einer Probe tritt. Das die Probe durchdringende modulierte Signal gelangt dann auf einem Empfänger und wird als Detektorsignal D über einen Verstärker 506 dem Phasendetektor 507 zugeführt. Der Phasendetektor 507 besteht aus einem einstellbaren Phasenschieber 571, einem Mischer 572, einem Verstärker 573 sowie einem weiteren Verstärker 574. Das Detektorausgangssignal gelangt auf den Eingang des Verstärkers 573 und wird dem Mischer 572 zugeführt. Der Mischer 572 erhält des weiteren ein Signal aus dem einstellbaren Phasenschieber 571, an welchem das Signal S oder T zur phasenempfindlichen Detektion anliegt. Am Ausgang des Verstärkers 574 steht dann ein Meßsignal CH1 zur Verfügung.

Alternativ kann gemäß Fig. 10 die Modulation in der bereits erwähnten Two-Tone bzw. Zwei-Ton-Technik erfolgen, indem zwei diskrete Frequenzen aus den Oszillatoren 508 und 509 mit Hilfe des Mischers 510 gemischt und über einen Verstärker 511 als Modulationssignal M bereitgestellt werden. Das im Beispiel vom Oszillator 509 stammende Signal wird über ein Koppelglied 512 einer Frequenzverdopplung 513 unterzogen und über einen weiteren Verstärker 514 als Signal T dem phasenempfindlichen Detektor 507 zugeführt.

Das Modulationssignal M gemäß Fig. 508 stellt sich dabei einmal als Summe und zum anderen als Differenz der Frequenzen aus den Oszillatoren 508 und 509 dar.

Je nach hardwaremäßiger Ausbildung der Modulationsstrecke und dem zugehörigem Detektionssystem können entweder die Ein-Ton-Technik oder die Zwei-Ton-Technik angewendet werden. Kommerzielle Lock-In-Verstärker stehen jedoch für den benötigten Frequenzbereich (Mhz - Ghz) nicht zur Verfügung. Der Aufbau eines Lock-In Verstärkers zur Anwendung in der Laserspektroskopie erfolgte bisher aufgrund der zur Verfügung stehenden Hardware und mit Blick auf die konkrete Meßaufgabe derart, daß nur jeweils eines der beiden oben genannten Verfahren realisiert werden konnte. Daher ergibt sich ein hoher Aufwand bei geänderten Meßaufgaben, da eine entsprechende Änderung des Versuchsaufbaus bzw. der Auswerteelektronik notwendig ist. Insbesondere ist es nicht möglich, bei einem zweikanaligen Versuchsaufbau mit separatem Meß- und Referenzkanal wechselweise oder gleichzeitig die unterschiedlichen Verfahren zur Optimierung des Meßergebnisses anzuwenden.

Wie bereits dargelegt ist es bekannt, zur Erhöhung der Empfindlichkeit einer Absorptionsmeßstrecke zusätzlich eine Modulation des Laser-Trägersignals anzuwenden. Da der Laser mit der Zeit bezogen auf die hierfür benutze Rampenfrequenz eine Absorptionslinie überstreicht, erhält man einen zeitlichen Signalverlauf, der von der Form der Absorptionslinie und der jeweiligen Detektionstechnik anhängt. In der Regel wird die Rampe zum Durchstimmen des Lasers mit einem Startsignal getriggert. Bei stabiler Laserdurchstimmung bleibt bei konstanter Absorption das Meßsignal ebenfalls konstant; sowohl in Bezug auf die Amplitude als auch auf den Triggerzeitpunkt bzw. das Startsignal. In der Praxis liegen jedoch zumeist verrauschte Meßsignale vor. Durch Addition mehrerer einzelner Scans wird das Signal-Rauschverhältnis innerhalb bestimmter Grenzen proportional zur Anzahl der Mittelungen der Scan-Signale besser.

Besonders kritisch sind Störsignale, die in der Stromrampe zum Durchstimmen des Lasers enthalten sind. Diese Störsignale können periodischer oder diskreter Natur sein. In diesem Falle kommt es schon bei geringen Störamplituden zu Frequenzen, die kleiner sind als die eigentliche Rampenfrequenz bei einem ansonsten stabilen Signal zur Verschiebung des Meßsignals je Scan. Mittelt man nun über eine größere Anzahl von derartig verschobenen Scans bzw. Spektren, so ergibt sich auch für das gemittelte Spektrum eine unerwünschte Verschiebung relativ zum ungestörten Mittelwertspektrum.

Um nun zum Beispiel eine quantitative Bewertung einer zu untersuchenden Substanz durchführen zu können, wird ein Kalibrier- oder Referenzsignal bekannter Konzentration benötigt. Dieses Kalibrier- oder Referenzsignal wird erzeugt, indem eine Meßzelle mit einem Eichgas bekannter Konzentration gefüllt wird und diese Meßzelle in den absorptiosskeptroskopischen Strahlengang des Meßsystems eingebracht wird. Das hierbei gemessene Spektrum des Eichgases wird als Kalibier- bzw. Referenzsignal zu Vergleichszwekken abgespeichert. Eine Auswerteeinheit berechnet das Amplitudenverhältnis vom aktuellen Meßspektrum bzw. Scan zum Kalibrier- bzw. Referenzsignal des Eichgases, beispielsweise über ein Regressionsverfahren.

Bedingt durch die relative Verschiebung von Meß- und Kalibrier- bzw. Rerefenzsignalen ist das mit bekannten Auswertealgorithmen berechnete Meßsignal stark fehlerbehaftet. Auch bei der Anwendung konventioneller Mittelung ergibt sich für das gemittelte Spektrum die erwähnte Verschiebung relativ zum ungestörten Mittelwertspektrum, so daß Meßfehler auftreten.

Bei der Durchdringung bzw. Transmission durch die Absorptions-Meßzelle unterliegt die Strahlung des Diodenlasers, welche eine ursprüngliche Intensität $I_0$ aufweist, einer Abschwächung gemäß dem Lambert-Beerschen Gesetz. Diese Abschwächung I ergibt sich wie folgt:

$$I = I_0 \cdot e^{-\delta \cdot l \cdot c},$$

wobei $\delta$ der Absorptionsquerschnitt in $cm^2/molec$, l die Absorptionsweglänge in cm und c die Spurengas-

konzentration in molec/cm$^3$ ist.

Für geringe Absorptionen, zum Beispiel bei der Spurengasanalytik mit $\delta \cdot l \cdot c \ll 1$, läßt sich das Lambert-Beersche Gesetz vereinfacht wie folgt schreiben:

$I = I_0 \cdot (1 - \delta \cdot l \cdot c)$.

Mit $\Delta I = I_0 - I$ ergibt sich für die Konzentration

$$c = \frac{1}{\delta l} \cdot \frac{\Delta I}{I_0}.$$

Hieraus folgt, daß bei konstantem Absorptionsquerschnitt $\delta$ und konstanter Absorptionsweglänge $l$ eine Änderung des berechneten Konzentrationswertes $c$ einmal durch eine Änderung der Absorptionsdifferenz $\Delta I$, aber auch durch eine Änderung der ursprünglichen Intensität $I_0$ verursacht werden kann bzw. auf diese Größen zurückzuführen ist.

Aus diesem Grunde wurde bereits vorgeschlagen, eine Normierung der Intensität derart vorzunehmen, indem die ursprüngliche Intensität $I_0$ parallel zur Messung der Absorptionsdifferenz $\Delta I$ bestimmt wird und anschließend eine Normierung erfolgt.

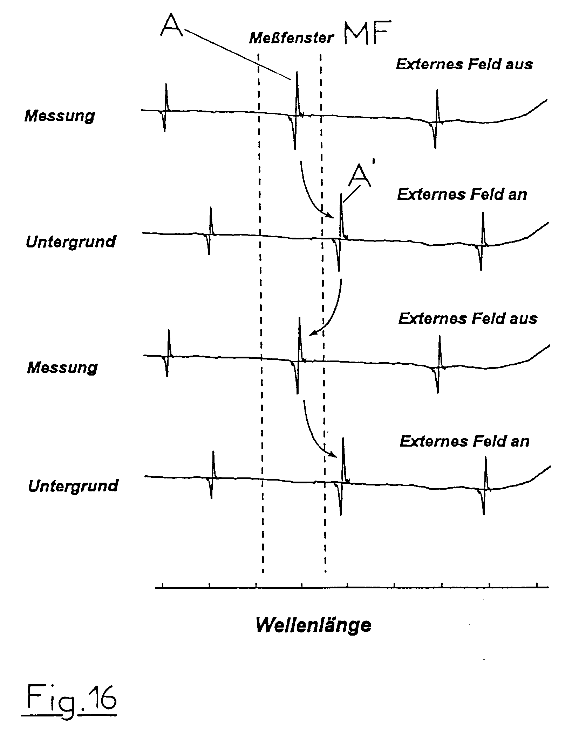

Eine prinzipielle Anordnung zur Durchführung eines derartigen Verfahrens ist in der Fig. 15 gezeigt. Gemäß Fig. 15 wird über eine Steuereinheit 601 für die Temperatur bzw. den Strom im pn-Übergang der Diodenlaser 602 angesteuert. Ausgangsseitig des Diodenlasers 602 ist ein Strahlteiler 603 angeordnet, welcher über geeignete Umlenkelemente 604 mit einem Referenzdetektor 605 in Verbindung steht. Der Strahlteiler 603, die Umlenkelemente 604 und der Referenzdetektor 605 bilden einen Kontrollkanal 606. Nach dem Passieren des Strahlteilers 603 tritt das Ausgangssignal des Diodenlasers 602 in eine Absorptions-Meßzelle 607 mit der Länge $l$ ein. In der Absorptions-Meßzelle 607 befindet sich das zu untersuchende Medium. Die Strahlung des Diodenlasers 602 wechselwirkt mit dem zu untersuchenden Medium in der Absorptions-Meßzelle 607 in der oben beschriebenen Art und Weise. Ausgangsseitig steht die Absorptions-Meßzelle 607 mit einem Meßdetektor 608 in Verbindung. Mittels des Meßdetektors 608 und einer nachgeordneten Auswerteschaltung 609 erfolgt eine Intensitätsbestimmung des Meßsignales. Zeitgleich bzw. parallel laufen die über den Referenzdetektor 605 ermittelten ursprünglichen Intensitätswerte $I_0$ in eine Signalverarbeitungseinrichtung 610 ein und werden dort gemeinsam mit dem Ausgangssignal der Auswerteschaltung 609 zur Konzentrationsbestimmung des Mediums in der Absorptions-Meßzelle 607 benutzt.

Es ist ersichtlich, daß bei diesem Aufbau aufgrund der zwei notwendigen Detektoren sowie des separat vorzusehenden Kontrollkanals ein hoher Aufwand erforderlich ist. Des weiteren führen z. B. Veränderungen in der Umgebungstemperatur des Referenzdetektors 605 zu einer Verfälschung des für die Normierung herangezogenen Intensitätswertes $I_0$. Dejustageeffekte im Strahlengang zwischen dem Strahlteiler 603 und dem Meßdetektor 608 können nicht erfaßt bzw. berücksichtigt werden.

Alternativ ist es zwar möglich, auf den Kontrollkanal 606 zu verzichten, jedoch muß dann im Zeitmultiplexbetrieb die Absorptions-Meßzelle 607 gegen eine Eichmeßzelle ausgetauscht oder das Meßgas aus dem Strahlengang innerhalb der Absorptions-Meßzelle 607 entfernt werden. Dies ist aber insbesondere bei automatischen Messungen oder Messungen über einen längeren Zeitraum aufgrund der erforderlichen Eingriffe in die gesamte Meßanordnung nachteilig.

Ebenfalls wurde vorgeschlagen, eine Normierung der Intensitäten dadurch vorzunehmen, daß nur der tatsächliche Detektorstrom des Meßdetektors 608 bestimmt wird. Hierfür ist es erforderlich, daß vom aktuellen Meßwert i der zuvor zu messende Dunkelstrom $i_D$ abgezogen wird. Da jedoch jede Art auf den Meßdetektor 608 einfallender Strahlung, der funktionsbedingt sehr breitbandig sein muß, den Detektorstrom ändert, besteht bei der vorstehend beschriebenen Verfahrensweise eine unerwünscht große Empfindlichkeit bei veränderlicher Hintergrundstrahlung.

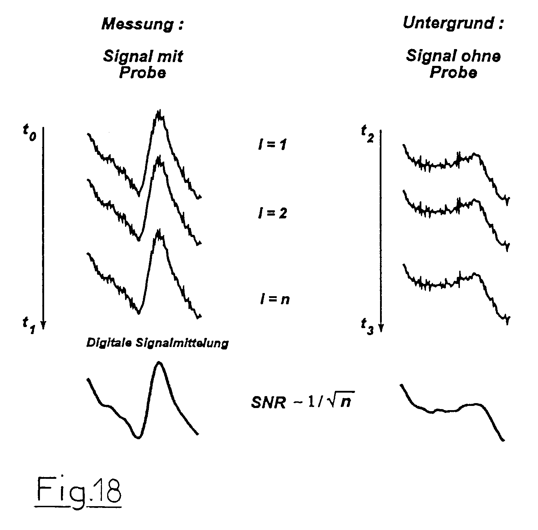

Um die geforderten hohen Empfindlichkeiten bei absorptionsspektroskopischen Spurengasanalysen zu erreichen, müssen bei bekannten Einrichtungen abwechselnd reine Meß- und Untergrundspektren aufgenommen werden. Die aufgenommenen Meß- und Untergrundspektren werden über eine vorgegebene Zeit, wie dies bereits erläutert wurde, einer digitalen Signalmittelung unterzogen. Das Ergebnis der digitalen Signalmittelung über verschiedene einlaufende Spektren bei einer Messung mit Probengas in der Meßzelle bzw. mit einer sogenannten probenfreien Nullluft wird beispielhaft mit der Figur 18 illustriert.

Schwierigkeiten ergeben sich dann, wenn in an sich wünschenswerterweise längere Mittelungszeiten vorgesehen sind. Dies deshalb, da dem eigentlichen Meßsignal bei besonders niedrigen Konzentrationen

4

störende Untergrundstrukturen überlagert sind, die zudem zeitlichen Veränderungen unterliegen. Die Schwierigkeit besteht nun darin, daß während der Mittelungszeiten, d. h. während der Messung und der anschließenden digitalen Signalmittelung sich der Untergrundbeitrag verändert (P. Werle, R. Mücke, F. Slemr, "The limits of signal averaging in atmospheric trace case monitoring by tunable diode laser absorption spectroscopy", Applied Physics, B 57, (1993), S. 131 bis 139).

Bei bekannten Meßzellenanordnungen erfolgt die Umschaltung zwischen Proben- und Untergrundmessung bei der spektroskopischen Spurengasanalyse durch den Austausch der Probenluft nach einer Meßzeit $t_0$ bis $t_1$ mit der erwähnten probenfreie Nullluft. Die Austauschzeit $t_1$ bis $t_2$ hängt von den unterschiedlichsten konstruktiven Parametern der Meßzellenanordnung einschließlich der Konstruktion von Gasein- und -auslaß, des Meßzellenvolumens, der Meßzellengeometrie und den Eigenschaften des Gases sowie der Pumpleistung ab.

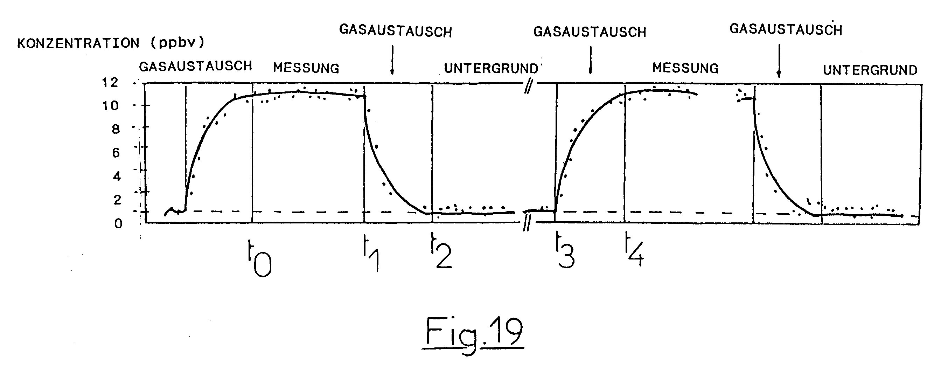

Zur Illustration des zeitlichen Verlaufes der Messungen, des Gasaustausches und der Untergrundbestimmung sei auf die Fig. 19 verwiesen.

Bei einem beispielsweisen Druck von ca. 30 mbar in einer Zelle mit einem Volumen von 5 l und einer Pumpenleistung von 30 $m^3/h$ ergibt sich eine Austauschzeit ($5 \cdot l/e$-Zeit = 99%) von etwa 5 sec. Dieser Wert kann durch geeignete Maßnahmen optimiert werden, liegt aber in der Regel bei einigen Sekunden. Nachdem der Gasaustausch vollzogen wurde, werden, unter Hinweis auf die zur Erläuterung beigefügte Fig. 19, im Zeitraum zwischen $t_2$ und $t_3$ ein Vielzahl von Untergrundspektren aufgenommen und gemittelt, um ein gleiches Signal-Rausch-Verhältnis wie bei der eigentlichen Probenmessung zu erhalten.

Eine Schwierigkeit bei der korrekten Konzentrationsbestimmung liegt darin, festzustellen, ob durch den Zeitversatz bzw. Zeitverzug zwischen den Proben- und Untergrundmessungen eine signifikante Signaldrift aufgetreten ist. Wenn eine derartige Signaldrift festgestellt wurde, ist der erforderliche Bezug zwischen den Messungen nicht mehr gewährleistet. Hieraus resultiert das Erfordernis, in einer möglichst kurzen Zeit die Probenmessung, den Gasaustausch und die Untergrundmessung, im Regelfall zyklisch wiederholt, durchzuführen.

Mit modernen bekannten Signalverarbeitungsmethoden, z. B. der erwähnten digitalen Signalmittelung können die eigentlichen Messungen sehr schnell und effektiv durchgeführt werden. Als wesentlicher Nachteil der bekannten Verfahren und Anordnungen zur Proben- und Untergrundmessung verbleibt jedoch der zum Gasaustausch erforderliche Aufwand und die notwendige Gaswechselzeit.

Es ist aus den vorstehenden Problemen des Standes der Technik Aufgabe der Erfindung eine komplexe Vorrichtung zur absorptionsspektroskopischen Spurengasanalytik vorzuschlagen, mit der es gelingt zum einen in effektiver Weise eine Laserstromversorgung vorzuschlagen, daß weiterhin nach Durchlauf durch eine Meß- bzw. Referenzzelle erhaltene Signale unter Anwendung verschiedener Modulationstechniken bewertet werden können, weiterhin eine Driftkorrektur derart realisierbar ist, daß auf das ansonsten erforderliche Abspeichern einer Vielzahl von Rohspektren verzichtet werden kann und daß eine dynamische Normierungsmöglichkeit gegeben ist. Weiterhin soll auf nichtmechanischem Wege abwechselnd eine Proben- und Untergrundmessung realisierbar sein.

Darüber hinaus sollen einzelnen Komponenten zur Verwendung in einer Vorrichtung zur absorptionsspektroskopischen Spurengasanalytik vorgeschlagen werden, die die nachstehenden Aufgabenstellungen lösen.

So soll ein Verfahren und eine Anordnung zur Stromversorgung eines Meßlasers, insbesondere eines Diodenlasers zur absorptionsspektroskopischen Spurengasanalytik angegeben werden, welches möglichst geringe Störanteile zum Diodenlaser führt und das in der Lage ist, im Zusammenwirken mit einer optischen Modulation bzw. einem optischen Durchstimmen des Diodenlasers einen stabilen Laserbetrieb bzw. eines damit ausgerüsteten Meßsystems zu ermöglichen. Darüber hinaus soll ein Verfahren und eine Anordnung zum Bewerten eines Meßsignals nach Betrag und Phase in Bezug auf ein Referenzsignal angegeben werden, welches inbesondere eine Modulation und eine phasenempfindliche Demodulation eines Signals für absorptionsspektroskopische Untersuchungen, so zum Beispiel Spurengase derart ermöglicht, daß ein gleichzeitiger Betrieb unterschiedlicher Modulationstechniken in unterschiedlichen Meßkanälen möglich ist. Darüber hinaus soll eine Modulation und Demodulation im Bereich höherer Frequenzen durchführbar sein, wodurch sich die Zeitauflösung der gewonnenen Meßsignale und der Signal/Rauschabstand erhöhen bzw. verbessern läßt und wobei mit einem unkomplizierten Lock-In-Verstärker im Demodulationsteil gearbeitet werden kann.

Des weiteren soll ein Verfahren und eine Anordnung zur Driftkorrektur zeitdiskreter Meßsignale bezogen auf ein Referenzsignal angegeben werden, wobei die Genauigkeit der über eine Vielzahl von Spektren bzw. Scans erhaltenen Meßsignale erhöht wird. Eine weitere Teilaufgabe der Erfindung besteht darin, ein Verfahren und eine Anordnung zur Bestimmung und Normierung der Intensität eines Meßsignales bei der Modulations-Laser-Absorptionsspektroskopie bzw. Interferometrie anzugeben, mit welchem bzw. welcher bei der Verwendung lediglich eines einzigen Meßdetektors die ursprüngliche Intensität $I_0$ des Diodenlasers einschließlich des Einflusses unerwünschter Veränderungen im Strahlengang der Anordnung sicher erfaßt und auf der Basis derselben eine dynamische Normierung der Intensitäten zum Erhalt eines fehlerfreien, hochgenauen Meßsignales ausgeführt bzw. erreicht werden kann.

Letztlich besteht eine weitere Teilaufgabe der Erfindung darin, ein Verfahren und eine Anordnung zur abwechselnden Proben- und Untergrundmessung für die selektive Spurengasanalyse anzugeben, welches eine extreme Verkürzung des Zyklus bzw. der Zyklen zwischen Proben- und Untergrundmessung gestattet. Hierdurch soll gewährleistet werden, daß zum einen der Einfluß von Driften auf die Meßgenauigkeit verringert und zum anderen die Genauigkeit und Zeitauflösung bei der Bestimmung von Eigenschaften von Spurengases erhöht wird.

Die Lösung der Aufgabe der Erfindung erfolgt mit den Merkmalen der Patentansprüche 1, 3, 8, 9, 10, 14, 15, 18, 21, 23, 25, 26, 27 und 28, wobei die Unteransprüche mindestens zweckmäßige Ausgestaltungen und Weiterbildungen der Hauptansprüche umfassen.

Ein erster Grundgedanke der Erfindung besteht darin, eine Diodenlaser- Stromversorgungsendstufe mit einer extrem geringen Bandbreite einzusetzen, wobei eine vollständige elektrische Trennung zwischen der Gleichstrom-Diodenlaser-Stromversorgung und einem auf optischen Wege in den Diodenlaser implementierten Durchstimmungssignal, z. B. ein Rampensignal oder einem Sinus- oder Pulssignal, vorgesehen ist.

Durch die extrem niedrige Bandbreite der Laserstromversorgung, welche nicht mehr von der Frequenz des zum Durchstimmen erforderlichen Signals bzw. der Rampe abhängt, können Störungen, die ansonsten über die Stromversorgung in den Diodenlaser gelangen, unterdrückt werden, wodurch ein stabiler Laserbetrieb möglich wird, der bei entsprechend ausgerüsteten Meßsystemen die Grundlage für eine hohe Empfindlichkeit ist.

Vorteilhafterweise ist die Laserstromversorgung als Konstantstromquelle ausgeführt.

Zur Vermeidung einer Phasenverschiebung zwischen dem optischen Signal zum Durchstimmen bzw. Modulieren des Diodenlasers und der sich hierdurch ergebenden Frequenzänderung des Diodenlasers, erfolgt die optische Abbildung und das Zuführen einer definierten Wärmemenge unmittelbar in dem Bereich des pn-Übergangs des Diodenlasers. Die Abbildung kann dabei über ein Spiegel- oder Linsensystem erfolgen. Andererseits ist die Ausbildung einer Hybridanordnung möglich, wobei die zum auf optischem Wege erfolgenden Durchstimmen vorgesehene Laserdiode oder Lichtquelle in unmittelbarer Nähe des pn-Überganges des eigentlichen Diodenlasers angeordnet ist.

Ein zweiter Grundgedanke der Erfindung besteht darin, ein Verfahren und eine Anordnung vorzuschlagen, die einen simultanen Betrieb der Ein-Ton- und Zwei-Ton-Technik bei der Modulation bzw. Demodulation zum Beispiel des Signales eines Diodenlasers zur Anwendung in der Spektroskopie ermöglicht, wodurch das Bewerten eines Meßsignals vereinfacht wird und eine flexible optimale Anpassung an experimentelle Gegebenheiten, wie z. B. Laser-Rauschcharakteristik, Untergrundstrukturen u.s.w., gewährleistet ist.

Aufgrund der mit dem erfindungsgemäßen Verfahren und der zugehörigen Anordnung erzielbaren hohen Modulationsfrequenzen bis in dem Megahertz- und Gigahertzbereich kann eine Anwendung sowohl in schnell durchgestimmten continuous-wave(cw)Systemen als auch in gepulsten Systemen der Laserspektroskopie erfolgen, wodurch insgesamt eine Erhöhung der Zeitauflösung bei der jeweiligen Meßaufgabe realisierbar ist. Hierfür werden empfängerseitig zweckmäßigerweise breitbandige Detektoren eingesetzt.

Bei einer zweikanaligen Auslegung der erfindungsgemäßen Anordnung können typische meßtechnische Aufgaben, z. B. der gleichzeitige Betrieb von unterschiedlichen Modulationstechniken im Meß- und Referenzkanal erfüllt werden. Dies ist von besonderer Wichtigkeit, da die Ein-Ton und die Zwei-Ton Technik nicht nur unterschiedliche Signalformen erzeugen, sondern auch unterschiedlich von Störungen beeinflußt werden. Da beide Techniken mit den jeweils innewohnenden Vorteilen selektiert und kombiniert werden können, ist eine Anpassung des Gesamtsystems in Abhängigkeit von den aktuellen Betriebsbedingungen möglich.

In einer ersten Ausführungsform des Modulationsteils der erfindungsgemäßen Anordnung werden zwei unterschiedliche Frequenzen $\omega_1$ und $\omega_2$ mit Hilfe eines Mischers zur Summe $\omega_1 + \omega_2$ und zur Differenz $\omega_1 - \omega_2$ gemischt. Das Mischsignal steht nach entsprechender Pegelanpassung und gegebenenfalls erforderlich werdender Filterung als Modulationssignal M zur Verfügung. Ein Teil dieses Modulationssignals M wird über einen Koppler ausgekoppelt und nach geeigneter Filterung und Signalkonditionierung entweder in Form von $\omega_1 + \omega_2$ oder in Form von $\omega_1 - \omega_2$ als Ein-Ton Detektionssignal S zum Betreiben eines Demodulationsteils mit einem phasenempfindlichen Detektor bzw. zum Triggern des Lock-In-Verstärkers im Demodulationsteil bereitgestellt.

Um eine simultane Zwei-Ton Detektion auf der Basis eines Zwei-Ton Detektionssignals T zu ermöglichen, wird eine der beiden Grundfrequenzen $\omega_1$ oder $\omega_2$ ausgekoppelt und nach Frequenzverdoppelung pegelangepaßt und gegebenenfalls gefiltert. Das derart erhaltene Zwei-Ton Detektionssignal T wird dann analog dem Ein-Ton Detektionssignal S einem Demodulationsteil zugeführt.

Ausgehend von der vorstehend kurz beschriebenen Anordnung bzw. der sich aus dieser ergebenden Verfahrensweise ist es möglich, entweder in zwei separaten Meßkanälen simultan eine Ein-Ton und eine Zwei-Ton Detektion nach Art eines simultanen Mischbetriebes durchzuführen oder in einem Meßkanal sequentiell nacheinander bzw. abwechselnd mit der einen und anderen Modulationstechnik zu arbeiten. Auch bei einer Veränderung der Frequenzen $\omega_1$ und/oder $\omega_2$ beim Durchstimmen stellt sich durch die verwendeten Koppler unabhängig von der Art, welche Frequenz gerade variiert wird, eine selbsttätige automatische Kopplung des Modulationssignales M zum Ein-Ton Detektionssignal S und zum Zwei-Ton Detektionssignal T ein.

In einer zweiten Ausführungsform der erfindungsgemäßen Anordnung wird vorgeschlagen, zwei separat erzeugte Modulationsfrequenzen $\omega_1$ und $\omega_2$ mit Hilfe eines Kombinationsgliedes zum Modulationssignal M zusammenzuführen, welches nun aus den beiden originalen, ursprünglichen Frequenzen $\omega_1$ und $\omega_2$ besteht. Hierbei ergibt sich der Vorteil, daß keine höheren harmonischen Störkomponenten im Modulationssignal M selbst entstehen und daß sich keine Nebenempfindlichkeitsstellen bei der Auswertung des Meßsignals bemerkbar machen. Zur Generierung der für die phasenempfindliche Detektion im Demodulationsteil notwendigen Signale werden von den beiden Frequenzen $\omega_1$ und $\omega_2$ Anteile ausgekoppelt und einem Mischer zugeführt. Ausgangsseitig des Mischers wird zweckmäßigerweise nach geeigneter Filterung ein Differenzsignal $\omega_1 - \omega_2$ zur Zwei-Ton Detektion, d. h. ein Zwei-Ton Detektionssignal T bereitgestellt. Ein Ein-Ton Detektionssignal S wird durch Auskopplung einer Frequenzkomponente, z. B. $\omega_1$ oder $\omega_2$ abgeleitet.

Wenn eine Kopplung der beiden Modulationsfrequenzen $\omega_1$ und $\omega_2$ gewünscht wird, kann dies in einfacher Weise durch eine gemeinsame Ansteuerung der Oszillatoren erfolgen, welche die Modulationsfrequenzen $\omega_1$ und $\omega_2$ erzeugen.

Es ist ersichtlich, daß auch bei der zweiten Ausführungsform der Erfindung ein zweikanaliges Meßgerät bzw. eine Zweikanalmeßstrecke, für z. B. spezielle spektroskopische Untersuchungen erstellt werden kann.

Auf der Basis der beiden Ausführungsformen des erfindungsgemäßen Modulationsteiles der Anordnung zur Bewertung eines Meßsignals nach Betrag und Phase in Bezug auf ein Referenzsignal können Module erstellt werden, deren hardwareseitige Realisierung auf übliche Hochfrequenz-Bauteile, z. B. ein Widerstandsnetzwerk oder eine Ringkernkopplung, zur Realisierung des Kombinationsgliedes zurückgreift. Hierdurch sind Modulationsfrequenzen bis in den Megahertz- und Gigahertzbereich mit einfacher, kostengünstiger Technik beherrschbar.

Durch die höheren Modulationsfrequenzen und den simultanen Betrieb verschiedener Modulationstechniken kann unter den jeweiligen Betriebsbedingungen die optimale Technik ausgewählt werden, wodurch das Signal/Rauschverhältnis des aus dem noch zu beschreibenden Demodulationssignal abgeleiteten, zu bewertenden Meßsignals maximiert wird.

In einer ersten Ausführungsform eines erfindungsgemäßen Demodulations- bzw. Detektionsteils für ein Zweikanalgerät werden jedem Kanal getrennt jeweils die aus dem Modulationsteil bereitgestellten Ein-Ton Signale S und Zwei-Ton Signale T zugeführt. Dabei ist jeder Kanal so ausgebildet, daß er Ein-Ton oder Zwei-Ton Signale S oder T verarbeiten kann.

In einer zweiten Ausführungsform des Demodulations- bzw. Detektionsteils soll eine schmalbandige Filterung des Meßsignales bei einer festen Zwischenfrequenz zur besseren Unterdrückung von Rest-Oberwellen erreicht werden.

Das Demodulations- bzw. Detektionsteil gemäß zweiter Ausführungsform ist so aufgebaut, daß das Ein-Ton Signal S aus dem Modulationsteil auf einen Phasenschieber gelangt und mit dem Detektionssignal auf eine feste Zwischenfrequenz gemischt und schmalbandig gefiltert wird. Das Zwei-Ton Signal T wird ebenfalls über einen Phasenschieber auf einen weiteren Mischer geführt, welcher das Zwischenfrequenzsignal erhält. Hierdurch erfolgt ein zweiter Mischprozeß, in dessen Ergebnis das Ausgangssignal erhalten wird. Durch Einstellung bzw. Wahl einer festen Zwischenfrequenz, z. B. von 10,7 MHz besteht ein besonderer Vorteil der zweiten Ausführungsform des erfindungsgemäßen Detektionsteils darin, beim Einsatz in der spektroskopischen Meßtechnik auf kostengünstige Komponenten aus der allgemeinen Hochfrequenz- und Rundfunktechnik zurückgreifen zu können.

Ein Betreiben des Demodulationsteils nach der zweiten Ausführungsform der Erfindung ist neben den bereits vorgestellten Ausführungsformen des Modulationsteiles auch mit einem weiteren Modulationsteil möglich, bei welchem zwei Modulationsfrequenzen $\omega_1$ und $\omega_2$ mit Hilfe eines Mischers zur Summe $\omega_1 + \omega_2$ und zur Differenz $\omega_1 - \omega_2$ gemischt werden. Im Gegensatz zur bekannten Zwei-Ton-Technik werden aber bei dieser Ausführungsform über Koppelglieder jeweils eine der beiden Modulationsfrequenzen $\omega_1$ und $\omega_2$ an den Ausgängen zur Verfügung gestellt.

Das am ersten Ausgang erhaltene Signal gelangt dann auf das Demodulationsteil und wird dort, wie bereits erwähnt, mit dem Detektorsignal auf eine Zwischenfrequenz IF gemischt und schmalbandig gefiltert.

Mit dem zweiten Ausgangssignal erfolgt die zweite Mischung, um das Meßausgangssignal zu erhalten.

In einer weiteren Ausführungsform kann das Demodulations- bzw. Detektionsteil durch eine spezielle Pegelkontrolle ergänzt werden, um die Linearität des Meßsystems zu gewährleisten. Hierfür wird an den Eingängen des Mischers der jeweils anliegende Pegel ausgekoppelt und überprüft, ob der Lokaloszillator LO einen spezifizierten Mindestpegel erhält und ob der Pegel am RF Eingang des Mischers unter dem Kompressionspunkt liegt. Eine Pegelüberprüfung kann beispielsweise dadurch realisiert werden, indem die ausgekoppelten Pegel mit einem geeigneten Pegelmesser überwacht und die gemessenen Werte zur Ableitung einer Regelgröße einem Rechner zugeführt werden.

Zusammenfassend kann mit dem erfindungsgemäßen Verfahren bzw. der zur Realisierung des Verfahrens vorgesehenen Anordnung, insbesondere in der spektroskopischen Meßtechnik gemäß dem zweiten Aspekt der Erfindung eine Optimierung und Anpassung des jeweiligen Meßaufbaus an die spezielle Meßaufgabe ohne eine aufwendige Änderung der elektronischen Hardware erfolgen. Speziell bei der Ausführungsform mit einer additiven Zusammenführung der Modulationsfrequenzen $\omega_1$ und $\omega_2$ werden harmonische Störkomponenten im Modulationssignal M vermieden, so daß höhere Signal/Rauschverhältnisse realisierbar sind oder auf den Einsatz von besonders hochwertigen und teueren Laserdioden beim Aufbau einer spektroskopischen Meßstrecke verzichtet werden kann.

Mit dem erfindungsgemäßen Zusammenwirken von Modulations- und Demodulations- bzw. Detektionsteil, wobei letzteres auf das Prinzip eines Lock-In-Verstärker zurückgreift, kann ein simultaner Mischbetrieb bekannter Modulationsverfahren, z. B. zur direkten Modulation von Diodenlasern zur Anwendung in der Spektroskopie in einfacher Weise erreicht werden. Dadurch, daß weitgehende Anschlußkompatibilität zu konventionellen Systemen vorgesehen ist, können derartige konventionelle Systeme durch einen Ergänzungsmodul leicht umgerüstet werden.

Ein dritter Grundgedanke der Erfindung der besteht darin, eine On-Line-Driftkorrektur vorzusehen, welche neben der Spektroskopie mit Halbleiter-Diodenlasern auch bei allen anderen Meßverfahren eingesetzt werden kann, bei denen Signaldriften zu einer Verschlechterung des Meßergebnisses führen.

Durch die On-Line-Verschiebung einlaufender Meßsignale können auch schnelle Driften ausgeregelt werden, wodurch sich insgesamt das Signal-Rauschverhältnis des Meßsystems erhöht. Im Gegensatz zu konventionellen Verfahren wird dabei ausgeschlossen, daß die Informationen über das Einzelspektrum, bedingt durch den Mittelungsprozeß, verloren gehen.

Durch die On-Line Driftkorrektur ist es nicht mehr erforderlich, eine große Anzahl von Rohspektren zur späteren Off-Line Analyse abzuspeichern. Vielmehr ist es möglich, die Ergebnisse der korrigierten Mittelung in Echtzeit zu erhalten.

Dies wird dadurch erreicht, daß eine On-Line Analyse und Korrektur der relativen Verschiebung zwischen Meß- und Kalibrierspektrum bzw. Referenzsignal durchgeführt wird, bevor die jeweiligen Daten mittels Durchschnittsbildung zusammengefaßt werden.

Eine Implementierung des erfindungsgemäßen On-Line Driftkorrekturverfahrens kann dabei sowohl rein hardware- oder rein softwareseitig als auch in einer Kombination von Hard- und Software erfolgen.

Ein vierter Grundgedanke der Erfindung besteht darin, ein On-Line-Normierung bei Anwendung eines Frequenzmodulationsverfahrens in der Laser-Absorptionsspektroskopie vorzuschlagen, wobei die Modulation derart erfolgt, daß dem Diodenlaser mindestens eine diskrete Frequenz aufmoduliert wird, die dann nach der Detektion mit einem phasenempfindlichen Detektionsverfahren, z.B. einem Lock-In-Verstärker, nachgewiesen wird. Erfindungsgemäß wird detektorausgangsseitig eine Restamplitude des Modulationssignales bestimmt, wobei diese Restamplitude einen Wert bzw. ein Maß für die Intensität $I_0$ darstellt, welcher für die an sich bekannte Intensitätsnormierung eingesetzt werden kann. Mit der Erfindung kann mit einem einzigen Meßdetektor eine weitgehende Unabhängigkeit von Hintergrundstrahlung erreicht werden und es ist neben der Bestimmung der ursprünglichen Intensität $I_0$ des Diodenlasers möglich, eventuelle Änderungen in der Systemjustage mit unerwünschten Auswirkungen auf die Meßverhältnisse automatisch mit zu erfassen und bei der Bewertung des Meßsignales zu berücksichtigen. Ein diskretes Umschalten, um eine Intensitätsnormierung vorzunehmen, ist bei der erfindungsgemäßen Anordnung nicht mehr notwendig.

Die erfindungsgemäße Lösung berücksichtigt die Tatsache, daß bei Halbleiter-Diodenlasern funktionsbedingt eine Kopplung von Frequenz- und Amplitudenmodulation vorliegt. So werden, wenn über einen Modulationsstrom Ladungsträger periodisch in den pn-Übergang des Diodenlasers injiziert werden, sowohl die Ladungsträgerdichte (Amplitudenmodulation) als auch der Brechungsindex im Laserresonator (Frequenzmodulation) geändert. Diese zwangsweise Kopplung beider Modulationsarten kann beispielsweise unter Berücksichtigung des Arbeitspunktes des Diodenlasers bzw. der auszuwählenden Laserstruktur in vorgebbarer Weise gesteuert bzw. beeinflußt werden.

EP 0 629 851 A2

Mittels der Erfindung wird die an sich nachteilige Kopplung zwischen Amplituden- und Frequenzmodulation bei einem Halbleiter-Diodenlaser in überraschender Weise für die Ableitung eines ursprünglichen Intensitätswertes $I_0$ zur einfacheren und zuverlässigen Intensitätsnormierung ausgenutzt.

Ein fünfter Grundgedanke der Erfindung besteht darin, auf den nach dem bekannten Stand der Technik erforderlichen Austausch des Proben- bzw. Spurengases gegen eine probenfreie Nulluft zu verzichten und anstelle dessen die für die zu untersuchenden Spezies charakteristischen spektralen Signaturen (Wellenlängen-)Position zu verschieben. Durch diese Verschiebung kann im nunmehr signalfreien spektralen Meßfenster eine Untergrundbestimmung erfolgen.

Diese Verschiebung oder das Ausblenden der Absorptionslinien von gegebenenfalls ein Dipolelement aufweisenden Gasmolekülen im Spuren- bzw. Probengas erfolgt dadurch, daß eine Meßzelle, welche das Spuren- bzw. Probengas aufnimmt, derart ausgebildet ist, daß auf das Gas ein elektrisches und/oder magnetisches Feld einwirken kann.

Durch die Einwirkung des elektrischen Feldes ergibt sich eine Aufspaltung der Spektrallinien, d. h. eine Verscheibung der Linienpositionen der Gasmoleküle nach dem Stark-Effekt.

Bei Einwirkung eines äußeren homogenen Magnetfeldes nach dem Zeeman-Effekt wird ebenfalls eine Wellenlängenverschiebung und Aufspaltung der Spektrallinien der Gasmoleküle erreicht.

Mittels des erfindungsgemäßen Verfahrens und der zugehörigen Anordnung gemäß dem fünften Grundgedanken kann durch einfaches, elektrisches Aktivieren eines Plattenkondensators bzw. eines Elektromagneten ein elektrisches Umschalten zwischen Proben- und Untergrundmessung erfolgen. Die für die Umschaltung erforderliche Zeit hängt dabei lediglich von der Geschwindigkeit der Ausbreitung des Feldes bzw. der Wechselwirkung des Feldes mit den Gasmolekülen ab.

Durch den Verzicht auf ansonsten erforderliche Schaltventile und Gasführungen zum Austausch der Meß- gegen eine Nulluft ist eine unerwünschte Veränderung im Gasstrom mit negativen Einflüssen auf die Meßgenauigkeit und -empfindlichkeit bei der absorptionsspektroskopischen Messung mit Sicherheit ausschließbar.

Letztendlich besteht ein wesentlicher Grundgedanke der Erfindung darin, die gemäß den einzelnen Aspekten der Erfindung vorgestellten Komponenten zu einem System zur absorptionspektroskopischen Spurengasanalytik derart zusammenzufassen, daß die Universalität eines derartigen Meßsystems erweitert, die Meßgenauigkeit erhöht und die Kosten bei der Herstellung des Meßsystems verringert werden.

Die Erfindung soll anhand von Figuren und Ausführungsbeispielen zu den einzelnen Aspekten näher erläutert werden.

Hierbei zeigen

Fig. 1 ein Ausführungsbeispiel einer Stromversorgung eines Diodenlasers gemäß dem ersten Grundgedanken der Erfindung mit der Möglichkeit des Durchstimmens über eine optische Abbildung;

Fig. 2 ein zweites Ausführungsbeispiel einer Stromversorgung eines Diodenlasers mit einer Hybridkopplung zwischen dem zum Durchstimmen verwendeten Laser und dem eigentlichen im Meßsystem aktiven Meß- bzw. Diodenlaser;

Fig. 3 eine erste Ausführungsform des Modulationsteils mit einem Mischer;

Fig. 4 eine zweite Ausführungsform des Modulationsteils mit einem Kombinationsglied zur festen Verknüpfung der Modulationsfrequenzen;

Fig. 5 das Demodulationsteil als Zweikanalsystem mit Ein-Ton und Zwei-Ton Option;

Fig. 6 ein spezielles Modulationsteil mit zwei ausgekoppelten Modulationsfrequenzen für das Zusammenwirken mit einem speziellen Demodulationsteil mit Zwischenfrequenzfilterung;

Fig. 7 ein Demodulationsteil in einer Ausführungsform für eine schmalbandige Filterung des Meßsignals bei einer festen Zwischenfrequenz;

Fig. 8 ein Demodulationsteil mit Pegelkontrolle;

Fig. 9 ein Modulationsteil zur Realisierung eines Ein-Ton Modulationsverfahrens nach dem Stand der Technik;

Fig. 10 ein Modulationsteil zur Realisierung eines Zwei-Ton Modulationsverfahrens nach dem Stand der Technik;

Fig. 11 ein Demodulationsteil nach Art eines Lock-In-Verstärkers zur phasenempfindlichen Detektion nach dem Stand der Technik;

Fig. 12a,b die prinzipielle Darstellung aufgenommener Scans ohne On-Line-Signalkorrektur (Fig. 12a) und mit On-Line-Signalkorrektur und anschließender Mittelung (Fig. 12b);

Fig. 13 den prinzipielle Aufbau einer Anordnung zur Driftkorrektur;

Fig. 14 ein Ausführungsbeispiel einer Anordnung zur Bestimmung und Normierung der Intensität eines Meßsignales auf der Basis der Modulations-Laser-Absorptionsspektroskopie;

Fig. 15     die Darstellung eines bekannten Prinzips der Intensitätsnormierung unter Verwendung abstimmbarer Halbleiter-Diodenlaser bei der Absorptionsspektroskopie;

Fig. 16     die prinzipielle Darstellung eines Schaltzyklus zur abwechselnden Proben- und Untergrundmessung nach der Erfindung;

Fig. 17a     eine Draufsicht einer Meßzelle zur Einwirkung eines elektrischen Feldes auf das Spuren- bzw. Probengas;

Fig. 17b     eine Seitenansicht der in Fig. 17a gezeigten Meßzelle;

Fig. 18     eine beispielhafte Darstellung der Ergebnisse einer digitalen Signalmittelung einlaufender Meß- und Untergrundsignale und

Fig. 19     den zeitlichen Verlauf eines ermittelten Konzentrationsprofils bei einem herkömmlichen Verfahren zur abwechselnden Proben- und Untergrundmessung mit zyklischem Gasaustausch.

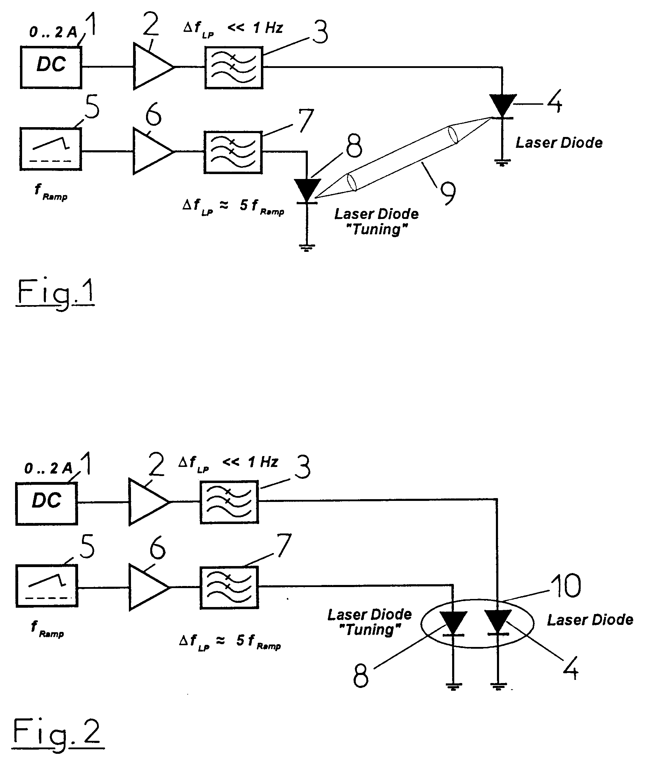

Bei beiden Ausführungsbeispielen gemä Fig. 1 und 2 wird der zu betreibende Dioden- bzw. Meßlaser nur noch mit einem Gleichstrom aus einer extrem schmalbandigen Laserstromversorgungsendstufe versorgt. Die Durchstimmung des Meßlasers geschieht mit einem zweiten Laser, dessen Energie auf optischem Wege direkt in den pn-Übergang des zu betreibenden Meßlasers eingekoppelt wird und dort unmittelbar eine Temperaturänderung erzeugt. Durch die mittels optischer Übertragung erzeugte Temperaturänderung kommt es entsprechend dem Durchstimm- oder Rampensignal zu einer durchstimmsignal- oder rampensynchronen Durchstimmung des Meßlasers.

Gemäß Fig. 1 besteht die Anordnung zur Diodenlaser-Stromversorgung zur Anwendung in Meßvorrichtungen zur absorptionsspektroskopischen Spurengasanalytik aus einer Stromversorgungseinheit 1, die zweckmäßigerweise als Konstantstromquelle ausgeführt ist, wobei ein jeweiliger Konstantstrom im Bereich von 0 bis typisch 2 A eingestellt werden kann. Das Konstantstromausgangssignal der Stromversorgungseinheit 1 gelangt auf einen Verstärker 2 und wird mit Hilfe eines Tiefpasses 3 mit einer Bandbreite, die unter 1 Hz liegt, begrenzt.

Ausgangsseitig steht der Tiefpass 3 mit dem Meßlaser 4 in Verbindung. Der Meßlaser 4 kann beispielsweise ein Bleisalz-Halbleiterdiodenlaser sein. Ein Rampengenerator 5 erzeugt ein sägezahnförmiges Rampensignal oder eine andere Signalform zum Durchstimmen, welches über einen weiteren Verstärker 6 auf einen weiteren Tiefpass 7 gelangt. Die Bandbreite des Tiefpasses 7 beträgt ungefähr das fünffache der Frequenz des Rampensignals. Ausgangsseitig gelangt das Signal aus dem Tiefpass 7 auf einen Durchstimmlaser 8, welcher mit einer Spiegelanordnung und/oder einem Linsensystem 9 auf optischem Wege unmittelbar Energie in den pn-Übergang des Meßlasers 4 überträgt. Die Systembandbreite zum Betreiben des Durchstimmlasers 8 ist unkritisch. Als Durchstimmlaser 8 kann ein beliebiger Laser, z. B. ein HeNe-Laser, aber auch ein thermischer Strahler, verwendet werden. Besonders einfach ist die Verwendung eines Halbleiter-Diodenlasers. Vorteilhafterweise kann ein GaAlAs-Halbleiter-Diodenlaser verwendet werden.

Es ist möglich, einen elektrischen oder mechanischen Pulsbetrieb, z. B. mittels Chopper vorzusehen. Beim Impulsbetrieb erfolgt die Durchstimmung im Meßlaser 4 durch thermische Relaxation.

Wenn gewünscht oder erforderlich, kann ein Teil der Energie des Meßlasers, beispielsweise mittels eines Strahlteilers ausgekoppelt werden, um ein Maß für die mittlere Leistung der Energie des Meßlasers 4 zu erhalten.

Es hat sich jedoch gezeigt, daß bei der Bestimmung von einzelnen Moleküllinien in der Spurengasanalytik die in der Bandbreite begrenzte Stromversorgungseinheit 1 in der Lage ist, eine annähernd konstante mittlere Leistung am Meßlaser 4 bereitzustellen, so daß weitere Maßnahmen zum Stabilisieren des Betriebes des Meßlasers 4 nicht erforderlich sind.

Beim zweiten Ausführungsbeispiel gemäß Fig. 2 erfolgt die Ausbildung der Stromversorgung des Meßlasers 4 und des Durchstimmlasers 8 in ähnlicher Weise, wie bereits beim ersten Ausführungsbeispiel beschrieben. Es wird hierzu auf die entsprechenden Erläuterungen verwiesen, wobei für jeweils gleiche Baugruppen dieselben Bezugszeichen verwendet wurden.

Im Unterschied zum ersten Ausführungsbeispiel wird beim zweiten Ausführungsbeispiel eine spezielle Hybridanordnung für den Durchstimm- und Meßlaser vorgestellt. Die Hybridanordnung 10 ist so aufgebaut, daß der Durchstimmlaser 8 als integraler Bestandteil des Meßlasers 4 ausgebildet ist. Hierfür wird der Durchstimmlaser 8 in unmittelbarer Nähe bzw. direkt am zu beeinflussenden Laserkristall oder pn-Übergang des Meßlasers 4 angebracht.

Durch eine derartige Hybridanordnung kann die zum Durchstimmen erforderlichen Energiemenge minimiert werden. Gleichzeitig werden störende Wärmeleitungseffekte vermieden. Durch eine geringe Wärmekapazität der Hybridanordnung bestehend aus Durchstimmlaser 8 und Meßlaser 4 kann die Rampenfrequenz $f_{Ramp}$ erhöht werden.

Mit dem Verfahren und der zugehörenden Anordnung zur Stromversorgung eines Meßlasers, insbesondere zur absorptionsspektroskopischen Spurengasanalytik gemäß dem ersten Grundgedanken der Erfindung, kann die zum Betreiben eines spektroskopischen Meßsystems ansonsten erforderliche Steuerungs-Hardware in einfacher Weise wesentlich verbessert werden. Durch die Anwendung einer Laserstromversorung mit extrem niedriger Bandbreite werden ansonsten über die Stromversorgung zum Meßlaser geführte Störungen unterdrückt, wodurch ein stabilerer Betrieb des Meßlasers mit der Folge einer höheren Empfindlichkeit des Meßsystems möglich ist.

Durch das unmittelbare Aufprägen einer Energiemenge auf optischem Wege in den Kristall bzw. pn-Übergang des Meßlasers kann die Emission desselben in einfacher Weise durchgestimmt bzw. verändert werden. Durch die elektrische Trennung zwischen der Gleichstromversorgung des Meßlasers und der zum Durchstimmen erforderlichen Rampenfrequenz gelangen keine störende Oberwellen vom Rampengenerator auf den Meßlaser, so daß auf aufwendige Maßnahmen zur Unterdrückung derartiger Oberwellen, die auf einen Detektor im jeweiligen Meßsystem gelangen, verzichtet werden kann.

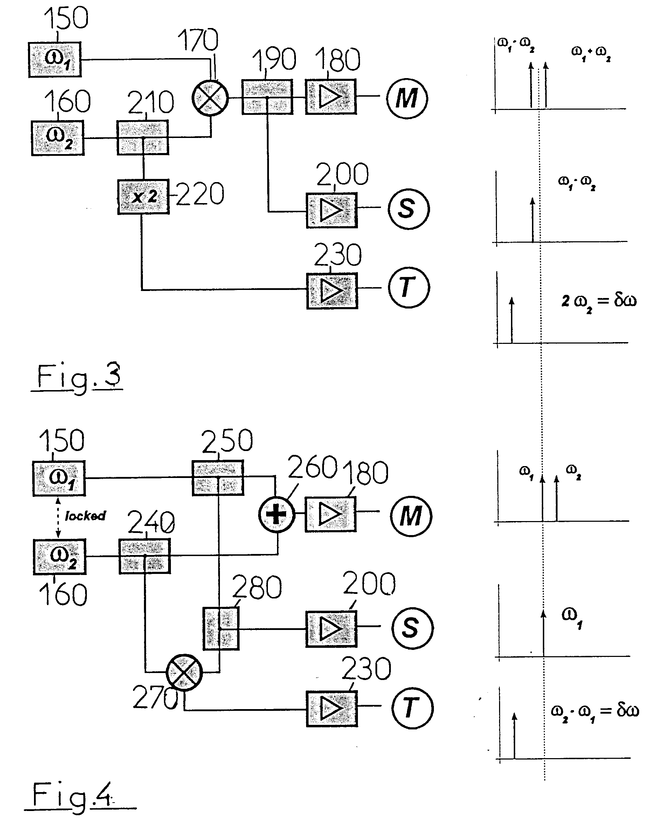

In einem ersten Ausführungsbeispiel soll auf die erste Ausführungsform des Modulationsteils unter Verweis auf die Fig. 3 näher eingegangen werden.

Ein erster Oszillator 150 und ein zweiter Oszillator 160 stellen jeweils eine Modulationsfrequenz $\omega_1$ bzw. $\omega_2$ zur Verfügung. Ausgangsseitig werden die Signale der beiden Oszillatoren 150 und 160 auf einen Mischer 170 geführt, der beispielsweise als Diodenmischer ausgebildet ist. Der Mischer 170 stellt ein Summen- und ein Differenzsignal $\omega_1 + \omega_2$ und $\omega_1 - \omega_2$ bereit. Dieses Signal steht nach geeigneter Pegelanpassung und Filterung, beispielsweise mit Hilfe eines ersten Verstärkers 180 als Modulationssignal M zur Verfügung. Ein Teil des Modulationssignals wird mischerausgangsseitig über einen zweiten Koppler 190 ausgekoppelt und über einen zweiten Verstärker 200 als Ein-Ton-Detektionssignal S bereitgestellt. Es liegen demgemäß als Ein-Ton-Signal S entweder die Summe $\omega_1 + \omega_2$ oder die Differenz $\omega_1 - \omega_2$ an.

Um eine simultane Zwei-Ton Detektion auf der Basis eines Zwei-Ton Detektionssignals T zu ermöglichen, wird von einem der beiden Oszillatoren 150 oder 160, im gewählten Beispiel vom Oszillator 160, ein Signalteil über einen ersten Koppler 210 ausgekoppelt und über einen Frequenzverdoppler 220 einem dritten Verstärker 230 zugeführt. Am Ausgang des dritten Verstärkers 230 liegt dann das Zwei-Ton Detektionssignal T an. Bei dem mittels der vorgestellten Anordnung gemäß erstem Ausführungsbeispiel realisierten Modulationsteil ist also das Ein-Ton und das Zwei-Ton Verfahren simultan realisierbar, d. h. es kann eine zweikanalige Meßanordnung aufgebaut werden, wo im Meß und Referenzkanal jeweils ein Ein-Ton Detektionssignal S bzw. ein Zwei-Ton Detektionssignal T zur Verfügung steht. Damit kann beim meßtechnischen Betrieb in jedem Kanal eine unterschiedliche Betriebsart eingestellt werden, wobei der derart realisierte Mischbetrieb simultan, d. h. gleichzeitig erfolgt.

Das in Fig. 4 beschriebene zweite Ausführungsbeispiel gemäß der zweiten Ausführungsform des zweiten Aspekts der Erfindung geht ebenfalls von zwei Oszillatoren 150 und 160 aus, die jeweils eine Modulationsfrequenz $\omega_1$ und $\omega_2$ liefern. Beide Oszillatoren sind mit Mitteln versehen, die ein gemeinsames Durchstimmen ermöglichen oder die zum Nachregeln im Sinne eines Drift-Ausgleiches verwendet werden. Ausgangsseitig sind die beiden Oszillatoren 150 und 160 jeweils auf einen ersten Koppler 240 und einen zweiten Koppler 250 geführt. Die beiden Modulationsfrequenzen $\omega_1$ und $\omega_2$ der Oszillatoren 150 und 160 gelangen des weiteren auf ein Kombinationsglied 260, welches beispielsweise als Widerstandsnetzwerk oder mittels einer Ringkernkopplung ausgeführt ist.

Am Ausgang des Kombinationsgliedes 260 wird das oberwellenfreie Additionsergebnis der beiden originalen Frequenzen $\omega_1$ und $\omega_2$ erhalten und über einen ersten Verstärker 180 als Modulationssignal M bereitgestellt.

Zur Generierung der für die phasenempfindliche Detektion notwendigen Signale werden die vom ersten und zweiten Koppler 240, 250 erhaltenen Signalanteile einem Mischer 270 zugeführt. Mischerausgangsseitig wird über einen dritten Verstärker 230 ein Zwei-Ton Detektionssignal T erhalten. Das Ein-Ton Detektionssignal S wird durch Auskopplung mit Hilfe eines dritten Kopplers 280, welcher in die Signalverbindung vom zweiten Koppler 250 zum Mischer 270 eingeschleift ist, erhalten.

Alternativ ist es möglich, den dritten Koppler 280 in dem Signalzweig ausgehend vom ersten Koppler 240 hin zum Mischer 270 anzuordnen. Hierdurch kann wahlweise entweder $\omega_1$ oder $\omega_2$ als Ein-Ton Detektionssignal S nach geeigneter Verstärkung mit Hilfe eines zweiten Verstärkers 200 erhalten werden. Es liegt im Sinne der Erfindung, daß die erwähnten Mittel zur Kopplung der Oszillatoren 150 und 160 beispielsweise mechanisch oder elektronisch unter Zuhilfenahme einer PLL-Regelung oder über geeignete Software realisiert werden können. Ebenso wie beim ersten Ausführungsbeispiel ist mit der Anordnung nach Fig. 4 ein simultanes Zweikanalverfahren zum Bewerten eines Meßsignals nach Betrag und Phase bezogen auf ein Referenzsignal möglich, wenn ein geeignetes, angepaßtes Demodulationsteil verwendet wird. Durch das gewählte Additionsprinzip, also der Kombination der Modulationsfrequenzen $\omega_1$ und $\omega_2$ im Gegensatz zur

Anwendung des Mischprinzips mit Hilfe des Mischers 170, wie im ersten Ausführungsbeispiel erläutert, können harmonische Störkomponenten im Modulationssignal von vornherein ausgeschlossen werden, wodurch sich die Selektivität, z. B. bei der spektroskopischen Untersuchung von Spurengasen mit Hilfe eines modulierten Laserstrahls, welcher mit einer Probe wechselwirkt, erhöht.

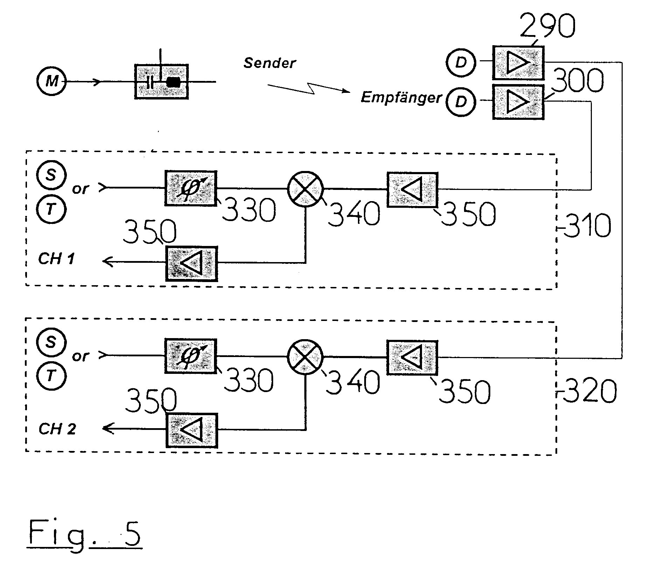

Unter Hinweis auf die Fig. 5 soll ein Zweikanal-Demodulationsteil mit einer Ein-Ton und Zwei-Ton Option vorgestellt werden, wobei eine getrennte Einstellbarkeit für das Ein-Ton und Zwei-Ton Verfahren für jeden der vorgesehenen zwei Kanäle CH1 und CH2 gegeben ist.

Im oberen Teil der Fig. 5 ist symbolisch dargestellt, wie ein Modulationssignal M über ein Einkoppelglied, z. B. ein Bias Tee auf einen Diodenlaser einwirkt, wobei das erhaltene Signal mit einer Meßstrecke bzw. einer Probe (symbolisiert mit dem Pfeil) wechselwirkt.

Im Meß- und Referenzkanal sind jeweils Empfänger vorgesehen, welche je ein Detektorsignal D liefern, welches mit Hilfe der Verstärker 290 bzw. 300 geeignet verstärkt auf jeweils einen Eingang je eines Kanals 310, 320 eines phasenempfindlichen Detektors gelangen. Jeder Kanal 310 und 320 verfügt je über einen einstellbaren Phasenschieber 330 und einen Mischer 340.

Zur Pegelanpassung bzw. Filterung weist jeder Kanal mindestens mischerein- und -ausgangsseitig weitere Verstärker und/oder Filter 350 auf. Das jeweils ausgangsseitig des Mischers 340 erhaltene Signal wird dann über einen derartigen Verstärker bzw. Filter 350 als kanalspezifisches Meßsignal CH1, CH2 erhalten. Die Phasenschieber 330 der jeweiligen Kanäle können jeweils mit dem Ein-Ton Signal oder dem Zwei-Ton Signal angesteuert werden, so daß eine einfache Umschaltung bzw. Auswahl eines vorgegebenen Verfahrens je Meß- und Referenzkanal möglich ist.

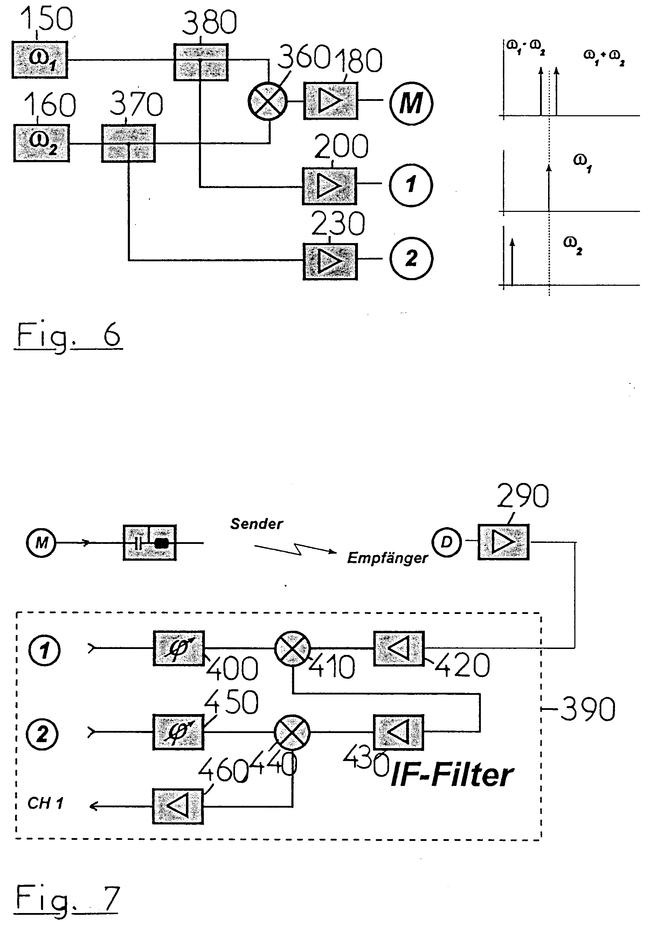

Unter Hinweis auf die Figuren 6 und 7 soll gemäß einem weiteren Ausführungsbeispiel ein Demodulationsverfahren auf der Basis einer schmalbandigen Filterung des Meßsignals bei einer festen Zwischenfrequenz erläutert werden, wobei Fig. 6 ein zweckmäßigerweise hierfür zu verwendendes Modulationsteil zeigt.

Gemäß Fig. 6 weist das spezielle Modulationsteil zwei Oszillatoren 150 und 160 auf, die jeweils eine Modulationsfrequenz $\omega_1$ und $\omega_2$ bereitstellen. Beide Modulationsfrequenzen gelangen auf einen Mischer 360, der ausgangsseitig über einen ersten Verstärker 180 das Modulationssignal M liefert. Mit einem ersten Koppler 370 und einem zweiten Koppler 380 wird jeweils je ein Teil des Ausgangssignals vom Oszillator 160 und vom Oszillator 150 ausgekoppelt und über einen zweiten bzw. einen dritten Verstärker 200, 230 als Signal 1 bzw. 2 zur phasenempfindlichen Detektion erhalten. Es stehen also an den Ausgängen Signale 1 bzw. 2 mit jeweils unterschiedlicher Frequenz und korrelierend mit den Frequenzen $\omega_1$ bzw. $\omega_2$ zur Verfügung.

Bezüglich des oberen Teils der Fig. 7 wird auf die Erläuterungen zur Fig. 5 verwiesen.

Die aus dem Modulationsteil gemäß Fig. 6 erhaltenen Signale M, 1 und 2 werden, wie dargelegt, zur Modulation und zur phasenempfindlichen Detektion benutzt. Das Demodulationsteil bzw. der phasenempfindliche Detektor 390 gemäß Fig. 7 zeichnet sich dadurch aus, daß mit dem Signal 1 das Detektorsignal auf eine Zwischenfrequenz IF gemischt und dort schmalbandig gefiltert wird. Hierfür ist ein erster Phasenschieber 400 vorgesehen, welcher mit einem ersten Mischer 410 zusammenwirkt, wobei der erste Eingang des ersten Mischers 410 mit dem Ausgang des ersten Phasenschiebers 400 verbunden ist und dessen zweiter Eingang über geeignete Verstärker bzw. Filter 420, 290 das Detektorsignal D erhält.

Das Ausgangssignal des ersten Mischers 410 gelangt über ein weiteres Filter 430 auf den ersten Eingang eines zweiten Mischers 440, dessen zweiter Eingang mit einem zweiten Phasenschieber 450 verbunden ist. Der Eingang des zweiten Phasenschiebers 450 führt das Signal 2. Es wird also das Signal am Ausgang des Filters 430 mit dem Signal 2 ein zweites Mal gemischt. Das Mischsignal wird auf einen Ausgangsverstärker 460 geleitet, welcher das Ausgangssignal des betrachteten Kanals CH1 führt.

Es liegt im Sinne der Erfindung, daß der phasenempfindliche Detektor 390 bzw. der in der Fig. 7 aufgezeigte einzige Meßkanal CH1 dupliziert wird, um einen weiteren oder mehrere Kanäle auszubilden bzw. zu erhalten. Es liegt ebenfalls im Sinne der Erfindung, daß anstelle des Modulationsteiles gemäß Fig. 6 eine Modulation mit den Anordnungen nach den Ausführungsbeispielen gemäß Fig. 3 und 4 vorgenommen werden kann, wobei in diesem Falle das Signal 1 und 2 jeweils entweder dem Ein-Ton Detektionsignal S oder dem Zwei-Ton Detektionssignal T entspricht.

Der besondere Vorteil des Demodulationsteiles gemäß Fig. 7 liegt darin, daß mit der speziellen Art der schmalbandigen Filterung des Meßsignals eine bessere Unterdrückung möglicherweise vorhandener restlicher störender Oberwellen, beispielsweise bei einer Realisierung des Modulationsteils gemäß Fig. 3, erfolgen kann. Letztendlich läßt sich durch die Zwischenfrequenzfilterung bei einer vorgegebenen Zwischenfrequenz von beispielsweise 10,7 MHz erreichen, daß kostengünstige, kommerzielle Bauteile, z. B. aus der Rundfunktechnik verwendet werden können.

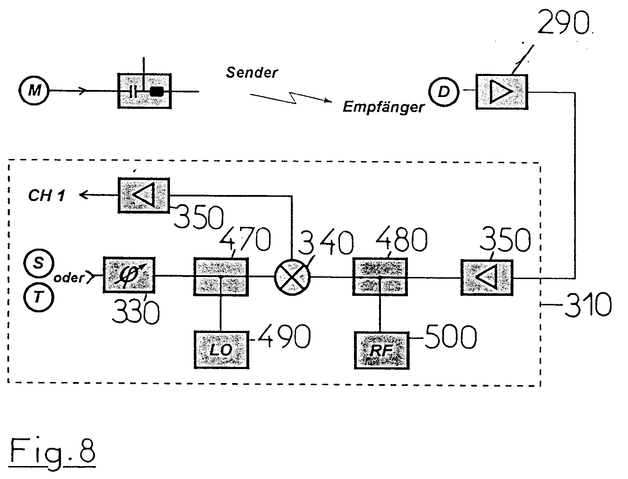

Die Möglichkeit der Implementierung einer Pegelkontrolle, um eine ausreichende Linearität des Meßsystems und damit der Messung zu gewährleisten, wird in dem Ausführungsbeispiel gemäß Fig. 8 gezeigt.

Hinsichtlich des oberen Teils der Fig. 8 sowie der Beschreibung des phasenempfindlichen Detektors 310 wird auf die Erläuterungen zur Fig. 5 verwiesen.

Ergänzend wird bei der Pegelkontrolle an den jeweiligen Eingängen des Mischers 340 über ein erstes und ein zweites Koppelglied 470, 480 festgestellt, ob sich die Mischereingangspegel in einem vorgegebenen Bereich befinden, d. h. ob der Lokaloszillator LO einen spezifizierten Mindestpegel erhält und ob der Pegel am RF Eingang des Mischers 340 unter dem Kompressionspunkt liegt. Diese Kontrolle erfolgt zweckmäßigerweise dadurch, indem man die am ersten und zweiten Koppler 470, 480 ausgekoppelten Signale auf einen geeigneten Pegelmesser 490 bzw. 500 führt und überwacht. Die Pegelmessung kann beispielsweise mit Hilfe eines HF-Millivoltmeters realisiert werden. Gleichzeitig könnten diese Werte digitalisiert und an einen Rechner zur Ableitung von Steuergrößen zur Optimierung des Betriebes des Verfahrens zur Bewertung des Meßsignales nach Betrag und Phase bezogen auf das Referenzsignal geführt werden.

Mittels des Verfahrens bzw. der zur Realiserung des Verfahrens zweckmäßigerweise einzusetzenden Anordnung gemäß dem zweiten Aspekt der Erfindung können absorptionsspektroskopische Meßstrecken z. B. zur Analyse von Spurengasen besonders kostengünstig und leicht an die spezielle Meßaufgabe anpaßbar aufgebaut werden. Insbesondere ist ein zeitgleicher, simultaner Meßbetrieb in mehreren Kanälen, z. B. im Meß- und Referenzkanal mit unterschiedlichen Modulationstechniken möglich. Durch die Verringerung störender Oberwellen im Modulationssignal und ein störungsfreies Referenzsignal erhöht sich der Signal/Rausch-Abstand des eigentlichen Meßsignals. Höhere erreichbare Modulationsfrequenzen gewährleisten eine Verbesserung der Zeitauflösung der Meßsignale. Letztendlich kann die Anordnung in Modulbauweise und anschlußkompatibel zu bekannten Ausführungsformen realisiert werden, so daß ein leichtes, kostengünstiges Nachrüsten und Modernisieren vorhandener Anlagen sichergestellt ist.

Unter Hinweis auf die Fig. 12a soll zunächst das prinzipielle Problem bei der Auswertung zeitdiskreter Meßsignale anhand einer absorptionsspektroskopischen Messung erläutert werden. Durch einen Startimpuls wird zunächst ein von einem Signalgenerator erhaltenes Signal, z. B. eine Rampe zum Abtasten der Absorption eines Meßsignals in einer Meßzelle getriggert. Hierbei wird über den verwendeten Laser, die Meßstrecke und das Detektionssystem sowohl das Meßsignal als auch ein Referenz- bzw. Kalibriersignal erzeugt.

Das Referenz- bzw. Kalibriersignal kann mit Hilfe einer Meßzelle mit hoher Absorption bereitgestellt werden, die von einem kleinen Teil des vom verwendeten Laser ausgekoppelten Laserlichtes durchdrungen wird. Hierdurch ist sichergestellt, daß im Referenzsignal ein ausreichend hohes Signal-Rauschverhältnis vorliegt.

Eine Störung der Stromversorgung des verwendeten Lasers, die kleiner als die Rampenfrequenz zum Durchstimmen des Lasers ist, bewirkt ein Jitter bzw. Offset im Meßsignal. Die Änderung der Rampenfrequenz ist mit dem Auf- und Abwärtspfeil bei der symbolischen Darstellung des Verlaufs des Rampensignals angedeutet. Der erwähnte Jitter zeigt sich in einer Verschiebung des Signals in Richtung der x-Achse. Dieser Meßsignal-Jitter ist in Fig. 12a für eine Reihe von On-Line einlaufenden Meßsignalen gezeigt.

Während das gemittelte Spektrum um die gestrichelte Linie zentriert sein sollte, tritt durch die Jitter eine Verschiebung in Form einer Signaldrift D auf, die bei der nachfolgenden Datenauswertung eine Verschlechterung der Systemnachweisgrenzen und erhebliche Meßfehler bewirkt.

Wird nun erfindungsgemäß das Referenzsignal mit einem hohen Signal-Rauschverhältnis zur Erzeugung eines Latch-Impulses L bei Überschreitung einer vorgegebenen Triggerschwelle verwendet, so kann man den diesem Triggerimpuls zugeordneten Spektrumkanal bzw. Scan kurzzeitig abspeichern.

Nun kann eine On-Line Driftkorrektur des jeweiligen Spektrumkanals bzw. des Scans vorgenommen werden, indem das jeweilige Spektrum bzw. der jeweilige Scan wieder in die eigentliche zentrale Position zurückverschoben wird. Hierdurch ist ausgeschlossen, daß bei einer nachfolgenden Mittelung der einzelnen Spektren eine unerwünschte Verschiebung des Mittelwertsignals auftritt.

Vorteilhafterweise werden die Spektren digitalisiert und in einen Zwischenspeicher abgelegt, so daß die erwähnte Verschiebung bzw. Rückverschiebung leicht durch eine Offset-Addition durchgeführt werden kann.

Fig. 12b symbolisiert die On-Line driftkorrigierten Meßsignale, die um eine gemeinsame Achse Z zentriert sind. Wie ersichtlich, ist bei einer anschließenden Mittelwertbildung der einzelnen Spektren bzw. der Scans keine unerwünschte Signaldrift zwischen dem Mittelwertspektrum und dem Referenz- bzw. Kalibriersignal mehr vorhanden.

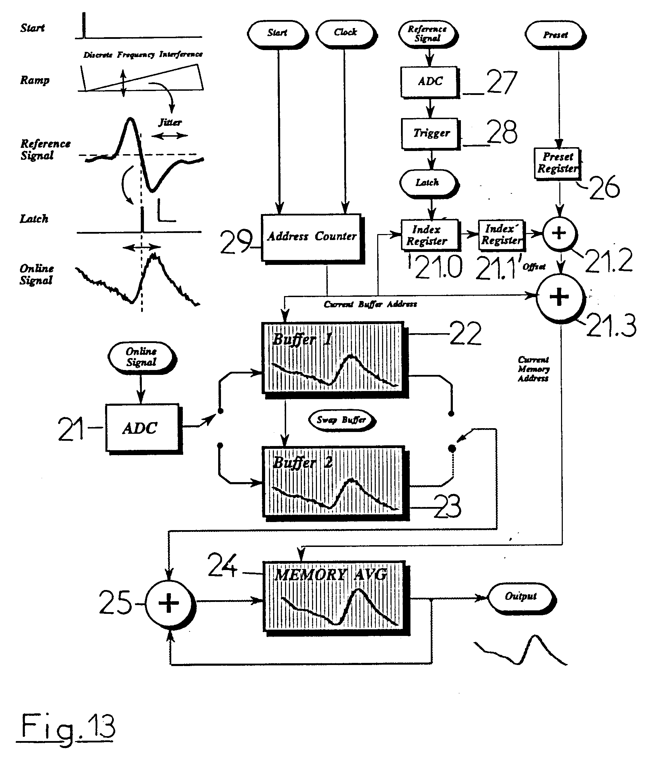

Eine beispielhafte Anordnung zur Driftkorrektur gemäß der Erfindung soll unter Zuhilfenahme der Fig. 13 nachfolgend beschrieben werden.

Das On-Line einlaufende Meßsignal gelangt zunächst auf einen ersten Analog/Digital-Wandler 21, welcher ausgangsseitig mit einer Wechselpufferanordnung 22; 23 in Verbindung steht.

Durch die Wechselpufferanordnung 22; 23 werden Totzeiteffekte vermieden. D. h., während man z. B. in den Puffer 22 das gerade digitalisierte Spektrum ablegt, wird das zuletzt betrachtete Spektrum im Puffer 23 synchron oder asynchron auf das in einen Speicher 24 bereits abgelegte gemittelte Spektrum aufaddiert.

In diesem Sinne sind die Puffer 22 und 23 ausgangsseitig wechselwirkend über ein erstes Additionsglied 25 mit dem bereits erwähnten Speicher 24 verbunden.

Die Ermittlung der Verschiebung der On-Line vorliegenden Meßsignale zum Referenz- bzw. Kalibriersignal wird wie folgt durchgeführt.

Nachdem alle vorhandenen Speicherzellen und Register zurückgesetzt wurden, wird zunächst ein Vorgaberegister 26 mit einem ausgewählten Kanal, z. B. 64 vorgeladen. Die Auswahl des Kanals erfolgt ausgehend von z. B. 128 Spektralkanälen, wobei der ausgewählte Kanal mindestens annähernd in der Mitte der Gesamtzahl der Spektralkanäle liegen soll. Das Referenzsignal wird über einen zweiten Analog/Digitalwandler 27, der mit dem ersten Analog/Digitalwandler 21 kombiniert sein kann, digitalisiert. Über einen Trigger 28 wird dann ein Latch-Impuls erzeugt, wenn das Referenzsignal einen vorgegebenen zentralen Triggerlevel über- oder unterschreitet. Durch einen externen Startimpuls läuft ein Adresszähler 29 ausgehend vom Systemtakt (Clock) hoch und das On-Line Meßsignal wird parallel zum Referenzsignal mit dem ersten Analog/Digitalwandler 21 digitalisiert. Das hierbei erhaltene Wandlungsergebnis wird in die Wechselpufferanordnung 22; 23 geschrieben. Die jeweilige Adresse wird dabei von dem Adreßzähler 29 vorgegeben.

Mit dem Auftreten des Latch-Impulses aus dem Trigger 28 wird die aktuelle Pufferadresse in das erste Indexregister 21.0 übernommen. In einem zweiten parallelen Ablauf geschieht zunächst keine Veränderung, da alle Adressen mit 0 vorbesetzt sind, d. h. es werden nur Operationen der Form 0 + 0 durchgeführt.

Der nächste Zyklus wird dann wieder von einem externen Startimpuls initiiert. Mit diesem Startimpuls wird der Inhalt des ersten Indexregisters 21.0 negiert in das zweite Indexregister 21.1 übernommen, welches nun den negativen Triggerwert vom Puffer 23 enthält. In einem zweiten Additionsglied 21.2 wird nun der negative Indexwert des zweiten Registers 21.1 mit dem Wert aus dem Vorgaberegister 26 addiert, wodurch im Ergebnis der durch den Jitter verursachte Offset erhalten wird. Mit dem Startimpuls wird auch die Wechselpufferanordnung 22; 23 umgeschaltet, so daß die aktuellen Daten jetzt im Puffer 22 eingeschrieben werden.

Während der Adresszähler 29 auf die aktuelle Pufferadresse (CBA) zeigt, wird für den Mittelungsprozeß im Speicher 24 die aktuelle Speicheradresse (CMA) aus der Addition von CBA und dem Offset berechnet.

Eine durch niederfrequente Störungen verursachte Verschiebung des Spektrums wird also durch das vorstehend beschriebene Verfahren (CMA = CBA + Offset) wieder korrigiert. Die erzielbare Auflösung hängt dabei von der Anzahl der Spektrenkanäle ab.

Bei einer vorgegebenen Mittelungszahl N sind aufgrund der Wechselpufferanordnung n + 1 Zyklen zu durchlaufen. Bei hohen Mittelungen (N > 1000) ist die so entstehende Totzeit zu vernachlässigen, so daß das gemittelte Signal quasi in Echtzeit zur Verfügung steht. Die vorstehend erwähnte Korrektur der Verschiebung des Spektrums nach der Beziehung CMA = CBA + Offset erfolgt vorteilhafterweise mit einem dritten Additionsglied 21.3, dessen Ausgang mit dem Speicher 24 in Verbindung steht.

Es liegt im Sinne der Erfindung, Teile der Anordnung zur Driftkorrektur gemäß dem dritten Aspekt der Erfindung oder alle dort verwendeten Baugruppen durch Software zu realisieren. Beispielsweise kann anstelle der diskreten Wechselpufferanordnung eine virtuelle Abbildung von Speicherbereichen, die unterschiedlich adressierbar bzw. unter unterschiedlichen Adressen aufrufbar sind, erfolgen.

Mit dem vorstehend beschriebenen Verfahren und der zugehörenden Anordnung zur Driftkorrektur zeitdiskreter Meßsignale bezogen auf ein Referenz- bzw. Kalibriersignal kann insbesondere bei absorptionsspektroskopischen Anwendungen die Verschiebung der Spektren von Scan zu Scan bezüglich eines Kalibrierspektrums erkannt und aufgrund der erkannten Verschiebung eine On-Line Korrektur vorgenommen werden. Bei einer nachfolgenden Mittelwertsbildung ist dann sichergestellt, daß das sich ergebende Mittelwertspektrum nicht zum Kalibrierspektrum hin verschoben ist, wodurch eine größere Empfindlichkeit des Meßsystems bei gleichzeitig höherer Auswertegenauigkeit, d. h. einem geringeren Fehleranteil im Meßsignal erreichbar ist.

Entgegen bisher üblichen Lösungswegen ist es nicht erforderlich, die erhaltenen Rohspektren zu speichern, um nachträglich mit entsprechenden Auswertealgorithmen eine Fehlerkorrektur vornehmen zu können.

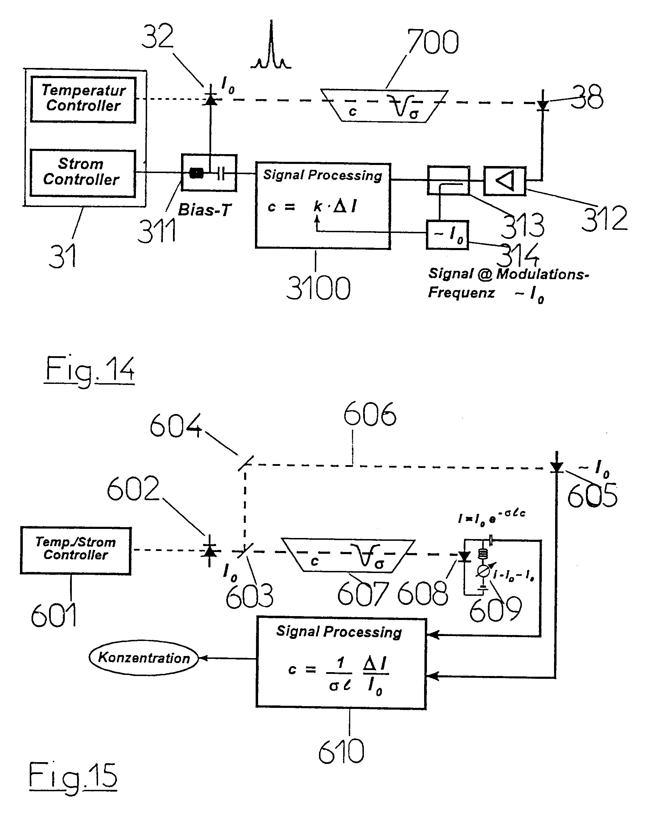

Wie in der Fig. 14 dargestellt, wird ein Diodenlaser 32 mit einer Steuereinheit 31 derart verbunden, daß der Diodenlaser 32 einerseits durchstimmbar ist und zur Erhöhung der Empfindlichkeit der Meßanordnung zusätzlich frequenzmoduliert werden kann. Durch das Durchstimmen des Diodenlasers über die Zeit wird eine Absorptionslinie überstrichen und es ergibt sich ein Signalverlauf, der letztendlich von der Absorptionslinie und der jeweiligen Auswertungs-Detektionstechnik abhängt. Die Modulation des Diodenlasers 32 wird vorteilhafterweise über ein Einkoppelglied 311 realisiert. Die Laserstrahlung des Diodenlasers 32 gelangt dann auf eine Absorptions-Meßzelle 700, welche strahlungsausgangsseitig mit einem Meßdetektor 38 in Verbindung steht. Der Ausgang des Meßdetektors 38 ist, gegebenenfalls über einen Verstärker 312, auf den Eingang einer Meßsignal-Verarbeitungseinrichtung 3100 geführt. Um zum Beispiel eine phasenempfindliche Detektion des Meßsignales durchführen zu können, steht die Meßsignal-Verarbeitungseinrichtung 3100 zum Erhalt eines Modulationsreferenzsignals mit dem Einkoppelglied 311 in Verbindung.

In die Verbindung zwischen den Meßdetektor 38 und die Meßsignal-Verarbeitungseinrichtung 3100 ist ein Koppler 313, zum Beispiel ein Widerstandsnetzwerk mit Impedanzanpassung eingeschleift, welcher einen Restamplitudenwert des meßdetektorausgangsseitig erhaltenen Signals ableitet. Eine Einrichtung zur Bestimmung einer Restamplitude bzw. von Restamplitudenwerten k 314 ist am Koppler 313 angeschlossen und liefert der Meßsignal-Verarbeitungseinrichtung 3100 einen Wert, welcher proportional zur Intensität $I_0$ und eventuell vorliegenden justagebedingten, absorptionsunabhängigen Intensitätsänderungen ist.

Die Einrichtung zur Bestimmung der Restamplitude 14 kann beispielsweise einen Demodulator mit nachgeschalteter Pegel-Bewertungseinheit oder ein Hochfrequenzvoltmeter umfassen.

Der in Fig. 14 gezeigte Diodenlaser 32 wird frequenzmoduliert, wobei die Frequenz f zum Beispiel 100 MHz beträgt. Durch diese Modulation werden bei einem Modulationsindex von $\beta \approx 1$ im Abstand der Modulationsfrequenz vom Träger je ein oberes und ein unteres Seitenband mit entgegengesetzter Phasenlage erzeugt. Der Meßdetektor 38 ist breitbandig ausgebildet, so daß er alle entstehenden Frequenzmischprodukte detektieren und entsprechende Signale einschließlich der bei Modulationsfrequenz ableiten kann. Da das obere und das untere Seitenband eine entgegengesetzte Phasenlage aufweisen, ergibt sich auch für die Ausgangsströme des Meßdetektors 38 bei der Modulationsfrequenz eine Phasenverschiebung von 180°, so daß die beiden Signale sich nach einer phasenempfindlichen Detektion, zum Beispiel mittels der Meßsignal-Verarbeitungseinrichtung 3100, zu einem Netto-Nullsignal aufheben.

Wird nunmehr der Diodenlaser 32 mit einem Injektionsstrom über eine Absorptionslinie eines Spurenstoffes bzw. -gases durchgestimmt, so erfährt jeweils das sich innerhalb der Absorptionslinie befindliche Seitenband eine Abschwächung. Dadurch wird das oben beschriebene Gleichgewicht gestört und es ergibt sich ein von Null verschiedenes Signal. Bei Halbleiter-Diodenlasern besteht eine Kopplung von Frequenz- und Amplitudenmodulation. Werden nämlich über einen Modulationsstrom Ladungsträger periodisch in den pn-Übergang des Diodenlasers injiziert, so ändern sich sowohl die Ladungsträgerdichte als auch der Brechungsindex im Laserresonator. Diese Kopplung beider Modulationsarten äußert sich in der sogenannten Restamplitudenmodulation. Diese sollte an sich so klein wie möglich sein, läßt sich aber nie vollständig unterdrücken.

Da im Gegensatz zur Frequenzmodulation bei der Amplitudenmodulation das obere und das untere Seitenband in Phase sind, läßt sich die oben beschriebene Nullung bzw. das gegenseitige Aufheben nicht erreichen. Daraus resultiert ein Hochfrequenzstrom bei Modulationsfrequenz. Ein Teil dieses Hochfrequenzstromes ist mit dem vorbeschriebenen Koppler 313 auskoppelbar und kann in seiner Höhe nach mit der Einrichtung zur Bestimmung der Restamplitude demoduliert und bewertet werden. Der sich hieraus ergebende Wert ist proportional zur ursprünglichen Intensität und wird zur an sich bekannten Intensitätsnormierung verwendet.

Ein besonderer Vorteil des vierten Aspekts der Erfindung besteht darin, daß eine Normierung aufgrund der oben beschriebenen Bestimmung der ursprünglichen Intensität $I_0$ neben den Schwankungen der Intensität des Diodenlasers 32 auch die Dejustageeffekte und Driften der gesamten Meßanordnung, insbesondere der Absorptions-Meßzelle 700 und Alterungserscheinungen des Meßdetektors 38 berücksichtigt. Darüber hinaus ist die vorstehend beschriebene Verfahrensweise unabhängig von Änderungen in der Hintergrundstrahlung, so daß ansonsten erforderliche zusätzliche Maßnahmen zum Eliminieren derartiger Effekte oder deren Auswirkungen entfallen können.

Mit dem Verfahren und der Anordnung zur Bestimmung und Normierung der Intensität eines Meßsignals, insbesondere bei der Modulations-Laser-Absorptionsspektroskopie oder auch bei interferometrischen Messungen gemäß dem vierten Aspekt der Erfindung kann also mit einem einzigen Meßdetektor die ursprüngliche Intensität eines Diodenlasers sicher erfaßt und auf der Basis dieser Größe eine Normierung durchgeführt werden. Die derart durchgeführte Normierung ist von eventuellem Einfluß aufgrund der Hintergrundstrahlung frei und es werden nicht nur Änderungen der Leistung des Diodenlasers, sondern auch Änderungen aufgrund einer Dejustage der Optik des Meßaufbaus erfaßt.

Der fünfte Aspekt der Erfindung soll mit dem folgenden Ausführungsbeispiel erläutert werden.

Gemäß diesem Aspekt entfällt der ansonsten erforderliche physikalische Austausch des Probengases gegen eine probenfreie Nulluft. Die Fig. 16 zeigt die Darstellung eines Schaltzyklus zur abwechselnden Proben- und Untergrundmessung gemäß dem fünften Aspekt.

Eine Bestimmung der Art und der Konzentration von Spuren- bzw. Probengasmolekülen, die sich in einer Meßzelle befinden, erfolgt durch die Auswertung von Absorptionslinien A in einem vorgegebenen wellenlängenabhängigen Meßfenster MF. Nachdem die Absorptionslinien A in bekannter Weise bewertet wurden, wird das erfindungsgemäße elektrische und/oder magnetische Feld auf das in der Meßzelle befindliche Spuren- bzw. Probengas zur Einwirkung gebracht. Durch diese Feldeinwirkung verändert sich die Position der betrachteten Absorptionslinie A hin zur Lage der Absorptionslinie A'. Das betrachtete Meßfenster MF ist somit frei von Absorptionslinien, die auf das Spuren- bzw. Probengas zurückzuführen sind. Empfindlichkeitsbegrenzende Untergrundstrukturen, wie z. B. die durch Resonatoren erzeugten störenden Eichstrukturen und druckverbreiterte, zeitlich veränderliche atmosphärische Absorptionslinien, z. B. Wasser, werden durch die Feldwirkung nicht beeinflußt. Während der Zeit der Feldeinwirkung erfolgt nun eine Bestimmung der Untergrundstrukturen in bekannter Weise. Mit dem Beendigen des Feldaktivitäts-Zyklus erfolgt ein quasi Rücktransport der Absorptionslinie A' hinein in das Meßfenster MF.

Wie aus der Fig. 16 ersichtlich, kann nun in außerordentlich kurzen zyklischen Abständen eine Proben- und Untergrundmessung durch einfaches Ein- und Ausschalten des externen Feldes erreicht werden.

Die ansonsten für den Gasaustausch erforderliche Zeitspanne zwischen der Proben- und Untergrundmessung kann entfallen, wodurch der Einfluß störender Driften innerhalb der gesamten Meßeinrichtung reduziert wird. Dadurch, daß kein physikalischer Gasaustausch, z. B. durch das Schalten von Drei-Wege-Ventilen erfolgt, kann insbesondere bei laufenden Messungen in strömenden Medien die Meßempfindlichkeit erhöht werden. Dies ist beispielsweise bei der kontinuierlichen Untersuchung von Reinstgasen in der Halbleiterindustrie von elementarer Bedeutung.

Im Falle der Ausbildung der Meßzelle zur Einwirkung eines elektrischen Feldes auf das Spuren- bzw. Probengas ist es zur Ausbildung des Stark-Effektes erforderlich, daß die im Gas enthaltenen Substanzen, welche absorptionsspektroskopisch nachzuweisen sind, über ein permanentes Dipolmoment verfügen.

Dies ist jedoch bei einer Vielzahl von in der Umweltanalyse festzustellenden Substanzen der Fall, wie dies die Beispiele in der nachstehenden Tabelle zeigen.

| Substanz | Summenformel | Dipolmoment $\mu$ [Debye] |
|---|---|---|
| Formaldehyd | $HCHO$ | 2.34 |
| Aceton | $(CH)_2CO$ | 2.80 |
| Wasserstoffperoxid | $H_2O_2$ | 2.26 |
| Wasser | $H_2O$ | 1.94 |
| Methylchlorid | $CH_3Cl$ | 1.89 |
| Ameisensäure | $HCOOH$ | 1.70 |
| Ethylalkohol | $CH_3CHOH$ | 1.7 |
| Methyljodid | $CH_3J$ | 1.65 |
| Schwefeldioxid | $SO_2$ | 1.59 |
| Ammoniak | $NH_3$ | 1.47 |
| Methanol | $CH_3OH$ | 1.40 |
| Methylmercaptan | $CH_3SH$ | 1.26 |
| Schwefelwasserstoff | $H_2S$ | 1.02 |
| Carbonylsulfid | $OCS$ | 0.79 |
| Ozon | $O_3$ | 0.53 |
| Stickstoffdioxid | $NO_2$ | 0.29 |
| Distickstoffoxid | $N_2O$ | 0.17 |
| Kohlenmonoxid | $CO$ | 0.10 |

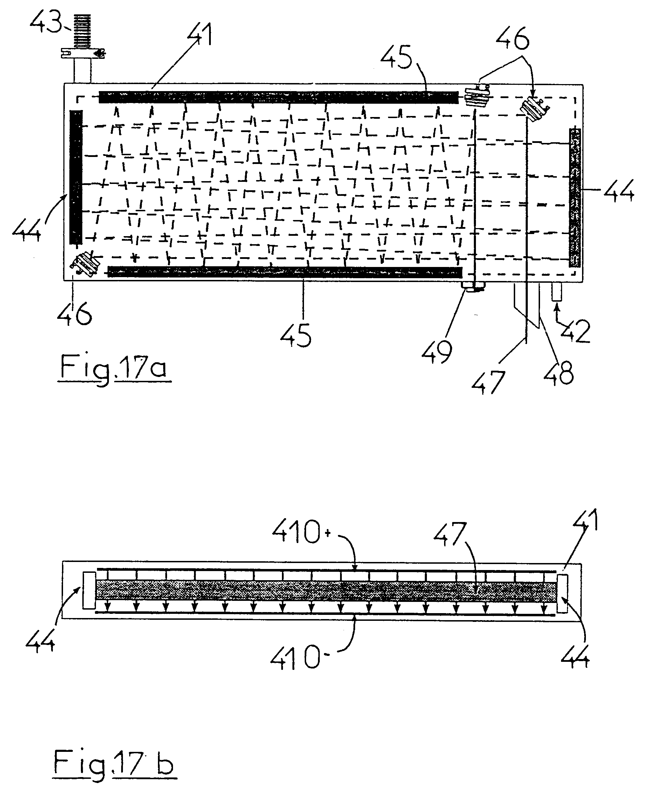

Eine beispielhafte Meßzelle zur Einwirkung eines elektrischen Feldes und Ausbildung des Stark-Effektes im Spuren- bzw. Probengas zur Untergrundmessung soll anhand der Figuren 17a und 17b näher erläutert werden.

Die Fig. 17a zeigt die Meßzelle 41 in Draufsicht, wobei die Meßzelle 41 einen Gaseinlaß 42 und einen Gasauslaß 43 aufweist. Der Gasauslaß 43 steht mit einer nicht gezeigten Pumpe in Verbindung. Gemäß dem Lambert-Beer'schen Gesetz muß für empfindliche Messungen ein möglichst großer Absorptionsweg in der Meßzelle realisiert werden. Hierfür wird der Meßstrahl in der Meßzelle 41 geeignet gefaltet. D. h., man bildet eine Mehrfachreflektionszelle mit Parallelstrahl oder nach der Art einer White- oder Herriott-Zelle aus.

Für die Mehrfachreflektion sind zwei sich gegenüberstehende x-Spiegel 44, zwei sich gegenüberstehende y-Spiegel 45 und im gezeigten Beispiel drei Justierspiegel 46 vorgesehen. Ein Laserstrahl 47 wird nun über eine Einkoppelstrecke 48 in das Zellvolumen eingekoppelt und gelangt über die Justier-, x-und y-Spiegel 46, 44, 45 unter Mehrfachreflektion mit dem in der Meßzelle 41 befindlichen Spuren- bzw. Probengas in Wechselwirkung. Die durch die Eigenschaften des Spuren- bzw. Probengases festgestellten Absorptionen werden mit einem strahlungsausgangsseitig angeordneten Detektor 49 bestimmt.

Das elektrische Feld wirkt nun gemäß Fig. 17a senkrecht zur Zeichenebene auf das in der Meßzelle 41 befindliche Spuren- bzw. Probengas ein.

Fig. 17b läßt erkennen, daß zur Ausbildung des vorerwähnten elektrischen Feldes die Meßzelle über zwei Kondensatorplatten 410 verfügt, welche im wesentlichen planparallel zur Ausbildung eines Plattenkondensators die Meßzelle 41 mindestens teilweise umschließen.

Zum Erreichen einer ausreichenden Feldstärke im Spuren- bzw. Probengas bzw. zwischen den Kondensatorplatten 410 wird der Abstand der Kondensatorplatten 410 im wesentlichen durch den Durchmesser des Laserstrahls 47, wie in der Fig. 17b symbolisch dargestellt, bestimmt. Durch nicht gezeigte Schaltmittel wird der Plattenkondensator bestehend aus den Kondensatorplatten 410 zur abwechselnden Proben- und Untergrundmessung zyklisch mit einer Spannungsquelle (nicht gezeigt) verbunden.

Die bei herkömmlichen Anordnungen erforderlichen Totzeiten während der Messung aufgrund eines physikalischen Gasaustausches mit dem Ziel der Untergrundstrukturbestimmung entfallen bei der in den Figuren 17a und 17b gezeigten beispielsweisen Anordnung.

Alternativ kann mit dem Ziel einer Beeinflussung des Spuren- bzw. Probengases nach dem Zeeman-Effekt ein schaltbarer Elektromagnet die Meßzelle 41 umgeben. Durch den zyklisch mit einer Stromquelle zu verbindenden Elektromagneten wird das Spuren- bzw. Probengas mit einem äußeren, im wesentlichen homogenen Magnetfeld beaufschlagt, so daß sich die in der Fig. 16 gezeigte Verschiebung bzw. das Ausblenden der betreffenden Absorptionslinie aus dem jeweiligen Meßfenster MF zur Untergrundstrukturbestimmung ergibt.

Mit dem Verfahren und der zugehörigen Anordnung gemäß dem fünften Aspekt der Erfindung kann auf der Basis einer schnellen Verschiebung der Energienieveaus des Spuren- bzw. Probengases in einer Meßzelle durch den Stark- oder Zeeman-Effekt das bisher erforderliche physikalische Austauschen des Gases zur Untergrundstrukturbestimmung entfallen. Durch das Anlegen eines elektrischen oder magnetischen Feldes an die Meßzelle werden die Energieniveaus von Gasmolekülen innerhalb der dem Feld ausgesetzten Zelle definiert verschoben. Empfindlichkeitsbegrenzende Untergrundstrukturen bleiben vom Feld unbeeinflußt, so daß ein Separieren von Proben- und Untergrundabsorption in einfacher Weise möglich ist.

Dadurch, daß von vornherein auf einen physikalischen Gasaustausch verzichtet wird, treten auch keine Dejustageeffekte durch mechanische Einwirkungen oder Strahlversatz, z. B. die Betätigung von Drei-Wege-Magnetventilen, auf. Letztendlich kann durch das einfache elektrische Aktivieren oder Deaktivieren des elektrischen oder magnetischen Feldes der zeitliche Abstand zwischen Proben- und Untergrundmessung praktisch verkürzt werden.

**Patentansprüche**

1. Vorrichtung zur absorptionsspektroskopischen Spurengasanalytik, umfassend
   - einen mit einem Durchstimmsignal durchstimmbaren Meßlaser mit einer Meßlaser-Gleichstromversorgung und einem Signalgenerator zur Erzeugung des Durchstimmsignals,
   - eine Einrichtung zur Modulation des mit einer zu untersuchenden Probe wechselwirkenden Meßlasersignals, wobei dieses Signal aufgrund der Wechselwirkung mit der Probe in Betrag und/oder Phase veränderbar ist und die geänderte Phase mittels einer Einrichtung zur phasenempfindlichen Demodulation unter Nutzung eines nicht von der Probe beeinflußten Referenzsignals bestimmbar ist,
   - eine Einrichtung zur Driftkorrektur zwischen dem Meßlasersignal und dem Referenzsignal, wobei die Einrichtung zur Driftkorrektur mit dem Signalgenerator zur Erzeugung des Durchstimmsignals zusammenwirkt und
   - eine Einrichtung zur Bestimmung und Normierung der Intensität des Meßlasersignals,
   **dadurch gekennzeichnet**,
   daß
   - die Stromversorgungseinheit zur Gleichstromversorgung des Meßlasers schmalbandig ausgeführt ist,

- der Durchstimmlaser elektrisch von der Stromversorgungseinheit unabhängig bzw. getrennt ist und nur mit dem Signalgenerator zur Erzeugung des Durchstimmsignals in Verbindung steht und das Durchstimmsignal erhält, welches die Intensität der vom Durchstimmlaser erzeugten Energie entsprechend ändert,

- der Durchstimmlaser so angeordnet ist, daß die entsprechend dem Durchstimmsignal erzeugte Energie unmittelbar auf den aktiven Bereich des Meßlasers gelangt,

- die Einrichtung zur Modulation und Demodulation zwei Oszillatoren zur Erzeugung einer Grundfrequenz ($\omega_1$, $\omega_2$,) deren Ausgänge auf einen Mischer führen, enthält und

- einen ersten Koppler, der zwischen einem der Oszillatoren und dem Mischer geschaltet ist, aufweist, wobei das ausgekoppelte Teilsignal auf einen Frequenzverdoppler führt, wobei

- der Ausgang des Mischers mit einem zweiten Koppler zur Auskopplung des Mischsignals der Grundfrequenzen ($\omega_1$, $\omega_2$) in Verbindung steht und daß gleichzeitig am Ausgang des Frequenzverdopplers ein Zwei-Ton-Referenz- bzw. Detektionssignal, am Ausgang des zweiten Kopplers ein Ein-Ton-Referenz- bzw. Detektionssignal und am Mischerausgang das Mischsignal bzw. Modulationssignal anliegt, oder daß

- zwei Oszillatoren zur Erzeugung der Grundfrequenzen ($\omega_1$, $\omega_2$) sowie ein Mischer vorhanden sind, wobei die Ausgänge der Oszillatoren je über einen ersten bzw. zweiten Koppler an ein Kombinationsglied angeschlossen sind, wobei am Ausgang des Kombinationsgliedes das Modulationssignal anliegt,

- die Ausgänge des ersten und des zweiten Kopplers auf einen Mischer führen, an dessen Ausgang ein Zwei-Ton-Referenz- bzw. Detektionssignal anliegt, wobei in einen Verbindungszweig zwischen dem ersten oder zweiten Koppler und den Mischer ein dritter Koppler eingeschleift ist, an dessen Ausgang ein Ein-Ton-Referenz- bzw. Detektionssignal anliegt,

- die Einrichtung zur Driftkorrektur derart ausgebildet ist, daß das On-Line einlaufende Meßsignal auf einen ersten Analog/Digital-Wandler und das On-Line einlaufende Referenzsignal auf einen zweiten Analog/Digital-Wandler gelangt, wobei das dann digitalisierte Meßsignal auf eine Wechselpufferanordnung geführt ist, welche ausgangsseitig mit einem ersten Additionsglied in Verbindung steht und wobei der Ausgang des ersten Additionsgliedes auf einen Speicher führt,

- daß aus dem digitalisierten Referenzsignal über einen Trigger ein schwellwertabhängiges Latch-Signal erzeugt wird, wobei mit dem Auftreten des Latch-Impulses aus dem Trigger eine beispielsweise aktuelle Adresse des Wechselpuffers in ein erstes Indexregister geschrieben wird,

- daß das Digitalisieren des Meß- und Referenzsignales von einem externen Startimpuls unter Rückgriff auf einen Systemtakt gesteuert wird, wobei ein Adreßzähler mit dem Startimpuls bzw. dem Systemtakt zusammenwirkt und der Adreßzähler die jeweilige Adresse des digitalisierten Meßsignales in der Wechselpufferanordnung vorgibt,

- daß mit einem weiteren Startimpuls in einem nächsten Korrekturzyklus der Inhalt des ersten Indexregisters negiert in ein zweites Indexregister übernommen wird, dessen Ausgang mit einem zweiten Additionsglied zusammenwirkt, wobei das zweite Additionsglied den negativen Indexwert des zweiten Indexregisters mit dem Wert aus einem Vorgaberegister addiert, wodurch im Ergebnis der durch Jitter verursachte Offset bzw. Drift erhalten wird und wobei das im Wechselpuffer befindliche digitalisierte Meßsignal über das mit dem Ausgang des Speichers rückgekoppelte erste Additionsglied unter Bildung eines Mittelwertes im Speicher aufaddiert wird, und wobei sich die aktuelle Speicheradresse aus der Addition einer fortgeschriebenen aktuellen Wechselpufferadresse aus dem Adreßzähler und dem Offset am Ausgang des zweiten Additionsgliedes ergibt und hierfür der Adreßzähler und der Ausgang des zweiten Additionsgliedes auf ein drittes Additionsglied führen, dessen Ausgang zur Adreßsteuerung mit dem Speicher verbunden ist und

- daß die Einrichtung zur Bestimmung und Normierung der Intensität des Meßsignales derart ausgebildet ist, daß gestützt auf die Intensitätsabschwächung der frequenzmodulierten Laserstrahlung in der Absorptionsmeßzelle, ausgehend von einer ursprünglichen Intensität, die mittels phasenempfindlicher Detektion bestimmt wird, eine Bestimmung der Restamplitude des Meßsignals bei der Modulationsfrequenz erfolgt und wobei der jeweilige Restamplitudenwert proportional der ursprünglichen Intensität der Laserstrahlung ist und mit dem Restamplitudenwert die Normierung der Intensitätsabschwächung durchgeführt wird.

2. Vorrichtung nach Anspruch 1,
   **dadurch gekennzeichnet**,
   daß zum Feststellen empfindlichkeitsbegrenzender Untergrundstrukturen in der Meßzelle das Spuren- bzw. Probengas einem elektrischen und/oder magnetischen Feld mit dem Ziel der Verschiebung der Energiezustände bzw. des Energieniveaus von, im Falle elektrischer Feldeinwirkung ein Dipolmoment aufweisenden, Gasmolekülen derart ausgesetzt wird, daß im jeweiligen Meßfenster während der Einwirkung des elektrischen und/oder magnetischen Feldes ein quasi Ausblenden der Absorptionslinien der beeinflußten Proben-Gasmoleküle erfolgt und die verbleibende, unbeeinflußte Untergrundstruktur ermittelt wird.

3. Verfahren zur Stromversorgung eines Meßlasers, insbesondere eines Diodenlasers zur absorptionsspektroskopischen Spurengasanalytik, wobei der Meßlaser über eine optische Abbildung einer Durchstimmlaserstrahlung auf den aktiven Bereich des Meßlasers thermisch durchgestimmt wird,

**gekennzeichnet durch**

eine vollständige elektrische Trennung zwischen dem zum Betreiben des Meßlasers erforderlichen Gleichstromsignal (DC) und einem elektrischen Durchstimmsignal ($f_{Ramp}$) zum Betreiben des Durchstimmlasers, wobei für die Erzeugung des Gleichstromsignals (DC) eine schmalbandige, von der Frequenz des elektrischen Durchstimmsignals ($f_{Ramp}$) unabhängige Stromquelle verwendet wird.

4. Anordnung zur Stromversorgung eines Meßlasers, insbesondere eines Diodenlasers zur absorptionsspektroskopischen Spurengasanalytik, umfassend:
   - einen Durchstimmlaser, der so angeordnet ist, daß die entsprechend einem Durchstimmsignal erzeugte Energie auf optischem Wege unmittelbar auf den aktiven Bereich des Meßlasers gelangt und
   - eine Stromversorgungseinheit zur Gleichstromversorgung des Meßlasers

   **dadurch gekennzeichnet,**

   daß
   - die Stromversorgungseinheit zur Gleichstromversorgung des Meßlasers schmalbandig und unabhängig von der Frequenz des Durchstimmsignals ($f_{Ramp}$) ausgeführt ist;
   - der Durchstimmlaser elektrisch von der Stromversorgungseinheit getrennt ist und mit einem Generator zur Erzeugung eines Durchstimmsignals ($f_{Ramp}$) zur thermischen Durchstimmung des Meßlasers mittels des Durchstimmlasers in Verbindung steht und das Durchstimmsignal ($f_{Ramp}$) erhält, welches die Intensität der vom Durchstimmlaser erzeugten Energie entsprechend ändert.

5. Anordnung nach Anspruch 4,
   **dadurch gekennzeichnet,**
   daß die schmalbandige Stromversorgungseinheit über einen Tiefpass mit einer geringen Bandbreite von im wesentlichen $\leq 1$ Hz mit dem Meßlaser verbunden ist.

6. Anordnung nach Anspruch 4 oder 5,
   **dadurch gekennzeichnet,**
   daß der Durchstimmlaser und der Meßlaser als Hybridanordnung unter Bildung einer integralen, eng benachbarten Einheit auf einem gemeinsamen Substrat angeordnet sind.

7. Anordnung nach Anspruch 4,
   **dadurch gekennzeichnet,**
   daß der Generator zur thermischen Durchstimmung des Meßlasers ein Rampen-, ein Sinus- oder ein Impulssignal bereitstellt.

8. Verfahren zum Bewerten eines Meßsignals nach Betrag und Phase in Bezug auf ein Referenzsignal, wobei ein Trägersignal mit einem Modulationssignal moduliert wird und mit einer Probe mit der Folge geänderter Phase und/oder Betrag wechselwirkt und mindestens die geänderte Phase des derart abgeleiteten, modulierten Meßsignals mittels phasenempfindlicher Demodulation unter Nutzung eines Referenz- bzw. Detektionssignals bestimmt und zur Auswertung der Eigenschaften der Probe herangezogen wird,
   **dadurch gekennzeichnet,**
   daß das Modulationssignal (M) aus zwei miteinander gemischten unterschiedlichen Grundfrequenzen ($\omega_1$, $\omega_2$) unter Bildung eines Summen- und eines Differenzsignals der Grundfrequenzen ($\omega_1$, $\omega_2$) erhalten wird, wobei sowohl die sich ergebende Mischfrequenz als auch jeweils eine der unterschiedli-chen Grundfrequenzen $\omega_1$ oder $\omega_2$ ausgekoppelt werden und die ausgekoppelte Grundfrequenz $\omega_1$ oder $\omega_2$ frequenzverdoppelt wird, sowie daß die ausgekoppelte Mischfrequenz als Ein-Ton-Referenz- bzw. Detektionssignal (S) und gleichzeitig die ausgekoppelte frequenzverdoppelte Grundfrequenz $\omega_1$ oder $\omega_2$

als Zwei-Ton-Referenz-bzw. Detektionssignal (T) genutzt wird, wodurch ein gleichzeitiger Betrieb mit jeweils dem Detektionssignal (S) bzw. (T) in je einem Meßkanal oder ein sequentieller, abwechselnder Betrieb mit dem Detektionssignal (S) und (T) in einem einzigen Meßkanal möglich ist.

9. Verfahren zum Bewerten eines Meßsignals nach Betrag und Phase in Bezug auf ein Referenzsignal, wobei ein Trägersignal mit einem Modulationssignal moduliert wird und mit einer Probe mit der Folge geänderter Phase und/oder Betrag wechselwirkt und mindestens die geänderte Phase des derart abgeleiteten, modulierten Meßsignals mittels phasenempfindlicher Demodulation unter Nutzung eines Referenz- bzw. Detektionssignals bestimmt und zur Auswertung der Eigenschaften der Probe herangezogen wird,
   **dadurch gekennzeichnet**,
   daß aus dem durch Kombination zweier unterschiedlicher Grundfrequenzen ($\omega_1$, $\omega_2$) erhaltenen Modulationssignal (M) Teile der Grundfrequenzen ($\omega_1$, $\omega_2$) jeweils ausgekoppelt und zur Ableitung eines Zwei-Ton-Referenz- bzw. Detektionssignals (T) diese Teile der Grundfrequenzen ($\omega_1$, $\omega_2$) gemischt werden und daß gleichzeitig ein Auskoppeln eines Teiles eines der ausgekoppelten Grundfrequenzen $\omega_1$ oder $\omega_2$ zur Ableitung eines Ein-Ton-Referenz- bzw. Detektionssignals (S) erfolgt, wodurch ein gleichzeitiger Betrieb mit jeweils den Detektionssignalen (S) bzw. (T) in je einem Meßkanal oder ein sequentieller, abwechselnder Betrieb mit dem Detektionssignal (S) und (T) in einem einzigen Meßkanal möglich ist.

10. Verfahren zum Bewerten eines Meßsignals nach Betrag und Phase in Bezug auf ein Referenzsignal, wobei ein Trägersignal mit einem Modulationssignal moduliert wird und mit einer Probe mit der Folge geänderter Phase und/oder Betrag wechselwirkt und mindestens die geänderte Phase des derart abgeleiteten, modulierten Meßsignals mittels phasenempfindlicher Demodulation unter Nutzung eines Referenz- bzw. Detektionssignals bestimmt und zur Auswertung der Eigenschaften der Probe herangezogen wird,
   **gekennzeichnet durch**
   ein Modulationssignal (M) aus zwei miteinander gemischten Grundfrequenzen ($\omega_1$, $\omega_2$) unter Bildung eines Summen- und eines Differenzsignals der Grundfrequenzen ($\omega_1$, $\omega_2$), wobei Teile der Grundfrequenzen ($\omega_1$, $\omega_2$) ausgekoppelt und als ein erstes und ein zweites Referenz- bzw. Detektionssignal mit jeweils einer vorbestimmten Frequenz bereitgestellt werden und daß eines der beiden Referenz- bzw. Detektionssignale in Verbindung mit dem Meßsignal bei der phasenempfindlichen Demodulation für eine Zwischenfrequenzfilterung genutzt wird.

11. Verfahren nach Anspruch 8 oder 10,
    **dadurch gekennzeichnet**,
    daß zur Bereitstellung der unterschiedlichen Grundfrequenzen ($\omega_1$, $\omega_2$) getrennt durchstimmbare Oszillatoren verwendet werden.

12. Verfahren nach Anspruch 9,
    **dadurch gekennzeichnet**,
    daß zur Bereitstellung der unterschiedlichen Grundfrequenzen ($\omega_1$, $\omega_2$) gemeinsam durchstimmbare Oszillatoren verwendet werden.

13. Verfahren nach einem der Ansprüche 8 bis 12,
    **dadurch gekennzeichnet**,
    daß die phasenempfindliche Demodulation des Meßsignals mit jeweils einem phasenempfindlichen Detektor je Meßkanal für das verwendete Referenz- bzw. Detektionssignal (S, T) erfolgt, wobei jeder Detektor entweder ein Ein-Ton- oder ein Zwei-Ton-Detektionssignal (S) bzw. (T) verarbeiten kann, wodurch ein gleichzeitiger Mischbetrieb mit unterschiedlichen Modulationstechniken je Meßkanal möglich ist.

14. Anordnung zum Bewerten eines Meßsignals nach Betrag und Phase in Bezug auf ein Referenzsignal, wobei ein Trägersignal mit einem Modulationssignal moduliert wird und mit einer Probe mit der Folge geänderter Phase und/oder Betrag wechselwirkt und mindestens die geänderte Phase des derart abgeleiteten, modulierten Meßsignals mittels phasenempfindlicher Demodulation unter Nutzung eines Referenz- bzw. Detektionssignals bestimmt und zur Auswertung der Eigenschaften der Probe herangezogen wird,
    umfassend:

- zwei Oszillatoren zur Erzeugung der Grundfrequenzen ($\omega_1$, $\omega_2$), deren Ausgänge auf einen Mischer führen,
- einen ersten Koppler, der zwischen einem der Oszillatoren und dem Mischer geschaltet ist, wobei das ausgekoppelte Teilsignal auf einen Frequenzverdoppler führt

**dadurch gekennzeichnet**,
daß der Ausgang des Mischers mit einem zweiten Koppler zur Auskopplung des Mischsignals der Grundfrequenzen ($\omega_1$, $\omega_2$) in Verbindung steht und daß gleichzeitig am Ausgang des Frequenzverdopplers ein Zwei-Ton-Referenz- bzw. Detektionssignal (T), am Ausgang des zweiten Kopplers ein Ein-Ton-Referenz- bzw. Detektionssignal (S) und am Mischerausgang das Mischsignal bzw. Modulationssignal (M) anliegt.

15. Anordnung zum Bewerten eines Meßsignals nach Betrag und Phase in Bezug auf ein Referenzsignal, wobei ein Trägersignal mit einem Modulationssignal moduliert wird und mit einer Probe mit der Folge geänderter Phase und/oder Betrag wechselwirkt und mindestens die geänderte Phase des derart abgeleiteten, modulierten Meßsignals mittels phasenempfindlicher Demodulation unter Nutzung eines Referenz- bzw. Detektionssignals bestimmt und zur Auswertung der Eigenschaften der Probe herangezogen wird, umfassend zwei Oszillatoren zur Erzeugung der Grundfrequenzen ($\omega_1$, $\omega_2$) sowie einen Mischer
**dadurch gekennzeichnet**,
daß die Ausgänge der Oszillatoren je über einen ersten bzw. zweiten Koppler an ein Kombinationsglied angeschlossen sind, wobei am Ausgang des Kombinationsgliedes das Modulationssignal (M) anliegt; die Ausgänge des ersten und des zweiten Kopplers auf einen Mischer führen, an dessen Ausgang ein Zwei-Ton-Referenz- bzw. Detektionssignal (T) anliegt, wobei in einen Verbindungszweig zwischen dem ersten oder zweiten Koppler und den Mischer ein dritter Koppler eingeschleift ist, an dessen Ausgang ein Ein-Ton-Referenz- bzw. Detektionssignal (S) anliegt.

16. Anordnung nach einem der Ansprüche 14 oder 15,
**dadurch gekennzeichnet**,
daß zur phasenempfindlichen Demodulation mit Zwischenfrequenzfilterung das Demodulationsteil einen ersten und einen zweiten Phasenschieber aufweist, an dessen Eingänge jeweils unterschiedliche Referenz- bzw. Detektionssignale anliegen, wobei der erste Eingang eines ersten Mischers mit dem Ausgang des ersten Phasenschiebers verbunden ist und am zweiten Eingang des ersten Mischers das Meß- bzw. Detektorsignal (D) anliegt, wodurch das Meß- bzw. Detektorsignal (D) auf eine feste Zwischenfrequenz in Abhängigkeit von der Frequenz des Referenz- bzw. Detektionssignal am ersten Phasenschieber gemischt wird;
daß das Ausgangssignal des ersten Mischers auf den ersten Eingang eines zweiten Mischers gelangt, dessen zweiter Eingang mit dem Ausgang eines zweiten Phasenschiebers verbunden ist, wobei am Eingang des zweiten Phasenschiebers das Referenz- bzw. Detektionssignal anliegt und daß am Ausgang des zweiten Mischers das gefilterte, demodulierte Meßsignal abgreifbar ist.

17. Anordnung nach einem der Ansprüche 14 bis 16,
**dadurch gekennzeichnet**,
daß an den Eingängen der jeweiligen ausgangsseitigen Mischer des Demodulationsteiles Mittel zur Überwachung der anliegenden Pegel zur Einstellung der Linearität der Meßanordnung vorgesehen sind.

18. Verfahren zur Driftkorrektur zeitdiskreter Meßsignale bezogen auf ein Referenzsignal in der absorptionsspektroskopischen Spurengasanalytik, wobei das Meß- und Referenzsignal zum Abtasten einer Absorptionslinie durchgestimmt, das Meßsignal zu vorgegebenen Zeitpunkten abgetastet und ein Amplitudenverhältnis zwischen dem aktuellen Meßsignal und Referenzsignal bestimmt wird,
**gekennzeichnet durch**
- Ermittlung der zeitlichen bzw. Phasenverschiebung (D) von aktuellem Meßsignal zum Referenzsignal während des Durchstimmens und On-Line Korrektur des aktuellen Meßsignals auf der Basis der zeitlichen bzw. Phasenverschiebung durch Rückverschiebung des Meßsignals, so daß die erfaßten Meßsignale um eine gemeinsame Zeit- oder Phasenachse (Z) zentriert sind, wobei anschließend die derart zentrierten erfaßten Meßsignale einer an sich bekannten Mittelwertbildung unterzogen werden.

**19.** Verfahren nach Anspruch 18,
**dadurch gekennzeichnet**,
daß die einlaufenden Meßsignale digitalisiert nacheinander in einen Wechselpuffer geschrieben und kurzzeitig zwischengespeichert werden, wobei das zuletzt zwischengespeicherte Meßsignal auf den in einem Speicher befindlichen Mittelwert aus den vorherigen Meßsignalen aufaddiert wird, wobei die Adresse des im Speicher aufzuaddierenden Meßsignals unter Berücksichtigung der ermittelten zeitlichen bzw. Phasenverschiebung bestimmt wird.

**20.** Verfahren nach Anspruch 18 oder 19,
**dadurch gekennzeichnet**,
daß das fortlaufende wechselseitige Zwischenspeichern der einlaufenden digitalisierten Meßsignale sowie die Übernahme der adreßspezifizierten Meßsignale in den Speicher von einem aus dem digitalisierten Referenzsignal abgeleiteten Latch-Impuls (L) gesteuert wird.

**21.** Anordnung zur Driftkorrektur zeitdiskreter Meßsignale bezogen auf ein Referenzsignal, insbesondere in der absorptionsspektroskopischen Spurengasanalytik mit einem durch einen Startimpuls getriggerten Signalgenerator, welcher das Meß- und das Referenzsignal zum Abtasten einer Absorptionslinie durchstimmt
**dadurch gekennzeichnet**,
- daß das On-Line einlaufende Meßsignal auf einen ersten Analog/Digital-Wandler und das On-Line einlaufende Referenzsignal auf einen zweiten Analog/Digital-Wandler gelangt, wobei das digitalisierte Meßsignal auf eine Wechselpufferanordnung geführt ist, welche ausgangsseitig mit einem ersten Additionsglied in Verbindung steht und wobei der Ausgang des ersten Additionsgliedes auf einen Speicher führt;
- daß aus dem digitalisierten Referenzsignal über einen Trigger ein schwellwertabhängiges Latch-Signal erzeugt wird, wobei mit dem Auftreten des Latch-Impulses aus dem Trigger eine beispielsweise aktuelle Adresse des Wechselpuffers in ein erstes Indexregister geschrieben wird;
- daß das Digitalisieren des Meß- und Referenzsignales von einem externen Startimpuls unter Rückgriff auf einen Systemtakt gesteuert wird, wobei ein Adreßzähler mit dem Startimpuls bzw. dem Systemtakt zusammenwirkt und der Adreßzähler die jeweilige Adresse des digitalisierten Meßsignales in der Wechselpufferanordnung vorgibt;
- daß mit einem weiteren Startimpuls in einem nächsten Korrekturzyklus der Inhalt des ersten Indexregisters negiert in ein zweites Indexregister übernommen wird, dessen Ausgang mit einem zweiten Additionsglied zusammenwirkt, wobei das zweite Additionsglied den negativen Indexwert des zweiten Indexregisters mit dem Wert aus einem Vorgaberegister addiert, wodurch im Ergebnis der durch Jitter verursachte Offset bzw. Drift erhalten wird, wobei das im Wechselpuffer befindliche digitalisierte Meßsignal über das mit dem Ausgang des Speichers rückgekoppelte erste Additionsglied unter Bildung eines Mittelwertes im Speicher aufaddiert wird und wobei sich die aktuelle Speicheradresse aus der Addition einer fortgeschriebenen aktuellen Wechselpufferadresse aus dem Adreßzähler und dem Offset am Ausgang des zweiten Additionsgliedes ergibt und hierfür der Adreßzähler und der Ausgang des zweiten Additionsgliedes auf ein drittes Additionsglied führen, dessen Ausgang zur Adreßsteuerung auf den Speicher führt.

**22.** Anordnung nach Anspruch 21,
**dadurch gekennzeichnet**;
daß Teile oder sämtliche der Anordnungsmerkmale durch wirkungsgleiche Softwareroutinen ersetzt werden.

**23.** Verfahren zur Bestimmung und Normierung der Intensität eines Meßsignals, insbesondere bei der Modulations-Laser-Absorptionsspektroskopie oder Interferometrie, wobei die frequenzmodulierte Laserstrahlung mit einer ursprünglichen Intensität $I_0$ in einer Absorptions-Meßzelle einer, z. B. mittels phasenempfindlicher Detektion bestimmten Intensitätsabschwächung $\Delta I$ unterliegt,
**gekennzeichnet durch**
die Bestimmung der Restamplitude des Meßsignals bei der Modulationsfrequenz, wobei der jeweilige Restamplitudenwert k proportional der ursprünglichen Intensität $I_0$ der Laserstrahlung ist und mit dem Restamplitudenwert k die Normierung der Intensitätsabschwächung $\Delta I$ erfolgt.

**24.** Verfahren nach Anspruch 23,
**dadurch gekennzeichnet**,
daß die jeweiligen Restamplitudenwerte k des Meßsignals bei der Modulationsfrequenz ausgangsseitig eines Meßdetektors ausgekoppelt und mittels eines Hochfrequenz-Voltmeters bestimmt werden.

**25.** Anordnung zur Bestimmung und Normierung der Intensität eines Meßsignals, insbesondere bei der Modulations-Laser-Absorptionsspektroskopie oder Interferometrie, umfassend
- einen durchstimmbaren mit mindestens einer Frequenz f modulierten Diodenlaser mit einer Intensität $I_0$, wobei Strahlung des Diodenlasers auf eine Absorptions-Meßzelle geleitet und dort entsprechend des in der Meßzelle befindlichen Mediums um einen Betrag $\Delta I$ absorbiert bzw. geschwächt wird;
- einen Meßdetektor zur Bestimmung eines Meßsignals auf der Basis der Intensität der gemessenen ausgangsseitigen Strahlung und
- eine Meßsignal-Verarbeitungseinrichtung zur Ermittlung des Betrages und der Phase des Meßsignals sowie der Intensitätsnormierung des Meßsignals,
**gekennzeichnet durch**
einen ausgangsseitig des Meßdetektors angeordneten Koppler, welcher mit einer Einrichtung zur Bestimmung einer Restamplitude des Meßsignals in Verbindung steht, wobei die Einrichtung zur Bestimmung der Restamplitude an die Meßsignal-Verarbeitungseinrichtung angeschlossen ist und dieser Restamplitudenwerte k bei der Modulationsfrequenz zuführt, welche proportional zur Intensität $I_0$ sind und justagebedingte, absorptionsunabhängige Intensitätsänderungen umfassen.

**26.** Verfahren zur abwechselnden Proben- und Untergrundmessung, insbesondere bei der hochempfindlichen absorptionsspektroskopischen, selektiven Spurengasanalyse, mit einem in einer Meßzelle befindlichen Spuren- bzw. Probengas, dessen Art und Konzentration durch in einem wellenlängenabhängigen Meßfenster befindliche Absorptionslinien bestimmt wird,
**dadurch gekennzeichnet**,
daß zum Feststellen empfindlichkeitsbegrenzender Untergrundstrukturen in der Meßzelle das Spuren- bzw. Probengas einem elektrischen und/oder magnetischen Feld mit dem Ziel der Verschiebung der Energiezustände bzw. Energieniveaus von, im Falle elektrischer Feldeinwirkung ein Dipolmoment aufweisenden, Gasmolekülen derart ausgesetzt wird, daß im jeweiligen Meßfenster während der Einwirkung des elektrischen und/oder magnetischen Feldes ein quasi Ausblenden der Absorptionslinien der beinflußten Proben-Gasmoleküle erfolgt und die verbleibende, unbeeinflußte Untergrundstruktur ermittelt wird.

**27.** Anordnung zur abwechselnden Proben- und Untergrundmessung, insbesondere bei der hochempfindlichen absorptionsspektroskopischen, selektiven Spurengasanalyse, umfassend eine absorptionsspektroskopische Meßeinrichtung mit einer Meßzelle zur Aufnahme eines Spuren- bzw. Probengases, wobei die Meßzelle eine Meßstrecke und einen Gasein- und -auslaß aufweist,
**dadurch gekennzeichnet**,
daß die Meßzelle von einem schaltbaren Plattenkondensator zur Einwirkung eines elektrischen Feldes auf das Spuren- bzw. Probengas umgeben ist, wobei das elektrische Feld im wesentlichen senkrecht auf die absorptionsspektroskopische Meßstrecke in der Meßzelle einwirkt.

**28.** Anordnung zur abwechselnden Proben- und Untergrundmessung, insbesondere bei der hochempfindlichen absorptionsspektroskopischen, selektiven Spurengasanalyse, umfassend eine absorptionsspektroskopische Meßeinrichtung mit einer Meßzelle zur Aufnahme eines Spuren- bzw. Probengases, wobei die Meßzelle eine Meßstrecke und einen Gasein- und -auslaß aufweist,
**dadurch gekennzeichnet**,
daß die Meßzelle derart von einem schaltbaren Elektromagneten umgeben ist, daß auf das Spuren- bzw. Probengas ein äußeres, im wesentlichen homogenes Magnetfeld einwirkt.

**29.** Anordnung nach Anspruch 27,
**dadurch gekennzeichnet**,
daß zur Untergrundmessung der schaltbare Plattenkondensator mit einer Spannungsquelle verbunden ist und während einer vorgegebenen Zeit bei Einwirkung des elektrischen Feldes mit der absorptionsspektroskopischen Meßeinrichtung die Untergrundstruktur bestimmbar ist.

**30.** Anordnung nach Anspruch 28,
**dadurch gekennzeichnet**,
daß zur Untergrundmessung der schaltbare Elektromagnet mit einer Stromquelle verbunden ist und während einer vorgegebenen Zeit bei Einwirkung des magnetischen Feldes mit der absorptionsspektroskopischen Meßeinrichtung die Untergrundstruktur bestimmbar ist.

Fig.1

Fig.2

Fig.3

Fig.4

Fig. 5

Fig. 6

Fig. 7

Fig.8

EP 0 629 851 A2

Fig.9

Fig.10

$\omega_1 - \omega_2$ $\omega_1 + \omega_2$

$2\omega_2 = \delta\omega$

Sender

Empfänger

Fig.11

30

Signal Drift caused by
Discrete Frequency Interference

Fig. 12a

Online
Shift
→

Signal Drift eliminated by
Online Drift Correktion

Fig. 12b

**Fig.13**

EP 0 629 851 A2

Fig. 14

Fig. 15

Fig.16

Fig.17a

Fig.17 b

*Messung :*

**Signal mit
Probe**

*Untergrund :*

**Signal ohne
Probe**

$t_0$

$I = 1$

$I = 2$

$I = n$

$t_1$

*Digitale Signalmittelung*

$t_2$

$t_3$

$SNR \sim 1/\sqrt{n}$

Fig.18

KONZENTRATION (ppbv)

Fig.19

EP 0 629 851 A2